(19) **Europäisches Patentamt / European Patent Office / Office européen des brevets**

(11) **EP 2 489 086 B1**

(12) **EUROPEAN PATENT SPECIFICATION**

(45) Date of publication and mention of the grant of the patent:
**08.12.2021 Bulletin 2021/49**

(21) Application number: **10768157.9**

(22) Date of filing: **12.10.2010**

(51) Int Cl.:
*H01M 10/04* *(2006.01)*　　*H01M 10/28* *(2006.01)*
*H01M 10/30* *(2006.01)*　　*H01M 10/34* *(2006.01)*
*H01M 50/116* *(2021.01)*　　*H01M 50/325* *(2021.01)*
*H01M 50/545* *(2021.01)*　　*H01M 50/107* *(2021.01)*
*H01M 50/124* *(2021.01)*

(86) International application number:
**PCT/US2010/052355**

(87) International publication number:
**WO 2011/046952 (21.04.2011 Gazette 2011/16)**

(54) **CYLINDRICAL NICKEL-ZINC CELL WITH POSITIVE CAN**

ZYLINDRISCHER NICKEL-ZINK-AKKUMULATOR MIT POSITIVER HÜLSE

CELLULE DE ZINC-NICKEL CYLINDRIQUE AVEC CORPS DE CYLINDRE POSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2009 US 251222 P**

(43) Date of publication of application:
**22.08.2012 Bulletin 2012/34**

(73) Proprietor: **ZincFive Power, Inc.
Tualatin, OR 97062 (US)**

(72) Inventor: **PHILLIPS, Jeffrey
La Jolla
California 92037 (US)**

(74) Representative: **Haseltine Lake Kempner LLP
Redcliff Quay
120 Redcliff Street
Bristol BS1 6HU (GB)**

(56) References cited:
**EP-A1- 2 045 855　　WO-A2-02/39534
CA-A1- 2 380 952　　JP-A- 2004 213 947
US-A- 4 049 883　　US-A1- 2009 233 159**

　• **None**

EP 2 489 086 B1

## Description

## BACKGROUND

This invention relates generally to rechargeable batteries and specifically to rechargeable nickel-zinc batteries. More specifically, the invention relates to improved rechargeable nickel-zinc batteries and methods of manufacture.

The popularity of cordless portable devices, such as power tools, has increased the needs and requirements for high energy density rechargeable batteries that can also deliver high power. As power and energy density requirements increase, the need for a high cycle life rechargeable electrodes also increases. The alkaline zinc electrode is known for its high voltage, low equivalent weight and low cost. The fast electrochemical kinetics associated with the charge and discharge process enables the zinc electrode to deliver both high power and high energy density. Nickel-zinc batteries can satisfy the need for higher power and higher energy density in e.g. batteries, suitable for electric vehicles (EV), plug-in hybrid electric vehicles (PHEV), consumer electronics and other applications.

Particularly important is not only the demand for higher power and higher energy density rechargeable batteries but also methods of manufacturing them more simply and at the same time making improvements in the battery performance. Sealed cylindrical nickel zinc cells have been proposed with both negative polarity cans and positive polarity cans, depending on consumer need. Each configuration has disadvantages that can result in significant reductions in the service life of the cell.

Conventional rechargeable alkaline batteries, including nickel-metal hydride and nickel cadmium batteries, have negative cans and positive caps. Cylindrical nickel-zinc cells may be beneficially designed with polarities reverse of that of conventional alkaline batteries. In the reverse polarity design, the battery vent cap is the negative terminal and the cylindrical case or can is the battery positive terminal. The reverse polarity design Attorney Docket No. PWRGP041WO provides low impedance and low hydrogen evolution at the negative terminal. When employed in electricity powered portable devices, such as power tools, the reverse polarity design does not affect the consumer because the rechargeable battery may be built into the device or be separately wrapped or encased. However, when a reverse polarity cell is individually supplied, a consumer may possibly mishandle the cell by, e.g., incorrectly inserting it into an electronic device, and thereby damaging the cell or device. Further, there is a tendency for negative polarity vent caps to be more leakage prone due to a phenomenon known as electrolyte creep.

Unfortunately, negative polarity cans in contact with the rechargeable zinc electrode may promote excessive hydrogen evolution if the metal can surface is not protected by either impervious polymer coatings or by plating of the internal surface with metals, alloys or materials that exhibit high hydrogen evolution over-potentials.

JP 2004 213947 A relates to a sealed alkaline battery with a return valve, to provide improved safety in abnormally high temperature.

## SUMMARY

Described are rechargeable nickel zinc cells, and methods of making them, of a configuration that utilizes a positive can with a vent cap at the positive pole of the battery. These improved cells, and methods of making them, take advantage of the stability imparted by a positive battery can, and avoid disadvantages associated with vent caps on the negative pole of the battery. Positive polarity cans, such as nickel plated steel cans, are relatively stable at the charge voltages of the alkaline nickel electrode. Even in the presence of poorly plated steel, the insolubility of the iron oxidation products limits the contamination of the zinc negative electrode such that gassing is maintained at a minimal level.

The present invention is defined by the features of claims 1 and 9 and relates to a rechargeable nickel zinc cell.

One aspect is a rechargeable nickel zinc cell, which in certain embodiments may include the following: i) a jellyroll electrode assembly including a nickel positive electrode, a zinc negative electrode, and at least one separator layer disposed between the nickel positive electrode and the zinc negative electrode; ii) a can in electrical communication with the nickel positive electrode, the can including an aperture at the base of the can; iii) a vent cap affixed to the base of the can and in electrical communication with the can, the vent cap configured to vent gas from the rechargeable nickel zinc cell via the aperture; and iv) a negative collector disc in electrical communication with the zinc negative electrode and electrically isolated from the can, the negative collector disc configured as a closure to the open end of the can.

Rechargeable nickel zinc cells as described may have nickel plated steel cans as well as negative current collector discs that are coated with a hydrogen evolution resistant material such as a metal, an alloy and/or a polymer. Electrical communication between the jellyroll and the negative current collector disk can be made via a welded metal tab, direct contact between the negative collector disc and the negative electrode or via a conductive spring configured to make contact with both the zinc negative electrode and the negative collector disc, the conductive spring compressed between the end of the jellyroll and the negative collector disc.

In some embodiments, a positive collector disc is interposed between, and in electrical communication with, the nickel positive electrode and the base of the can. In such embodiments, the base of the can may be punctured to form an aperture as described herein, before insertion of the positive collector disk or after. In one embodiment, the base of the can has a preformed aperture for venting as described in more detail below. In certain embodiments, the base of the can is thicker than a conventional can in order to resist bending or warpage from shape changes in the jellyroll. In other embodiments, the can base includes flutes, rings, ridges or other structures to aid in structural rigidity of the can base. The positive collector disk can be a metal foam that conforms to the aforementioned features at the bottom of the can so that undue volume is not sacrificed by the strengthening features.

Specific materials for the electrode substrates as well as formulations for the active materials and electrolyte are described. Rechargeable nickel zinc cells as described may be configured to non-commercial sizes or in some embodiments configured to a commercially available size, for example, AAA, AA, C, D and sub-C.

Other embodiments include methods of making rechargeable nickel zinc cells, including a method of making a rechargeable nickel zinc cell, the method including: i) sealing a jellyroll assembly, including a nickel positive electrode, a zinc negative electrode, and at least one separator layer disposed between said nickel positive electrode and zinc negative electrode, in a can such that the nickel positive electrode is in electrical communication with the base and the body of the can and the zinc negative electrode is in electrical communication with a negative current collecting disc at the other end of the can and electrically isolated from the can; the negative current collecting disc configured as a closure to the open end of the can; ii) puncturing the battery can at the base of the can, thereby making an aperture in the base of the can; and iii) affixing a vent cap at the base of the can, in electrical communication with the nickel positive electrode; the vent cap configured to vent gas from the rechargeable nickel zinc cell via the aperture. In some embodiments, the can has a preformed aperture and operation ii) is not necessary. The order of the process flow does not have to be as described, for example, the can may be punctured prior to sealing the jelly roll in the can. In embodiments where a preformed aperture is used, the vent cap can be affixed to the can prior to sealing the jellyroll in the can.

Methods may also include interposing a positive collector disc between, and in electrical communication with, the nickel positive electrode and the base of the can, prior to sealing the jellyroll in the can. Methods also include introducing an alkaline electrolyte into the can, either prior to sealing the jellyroll in the can or via the aperture in the can after the jellyroll is sealed in the can.

Methods as described are used to make cells as described above and in more detail herein.

These and other features and advantages are further discussed below with reference to the associated drawings.

## BRIEF DESCRIPTION OF THE DRAWINGS

Figure 1 is an exploded view of a cell assembly of the invention.

Figure 2A is a perspective representation showing assembly of electrodes and separator layers prior to winding into a jellyroll.

Figure 2B is a cross section of the assembly in Figure 2A.

Figure 2C is a cross section of a jellyroll assembly of the invention.

Figure 2D is a cross section of a jellyroll assembly after a current collecting substrate is folded in a particular configuration and after heat sealing.

Figure 2E is a cross section showing a gasket, negative current collector, can, and vent cap in an exploded view.

Figure 2F is a cross section of the jellyroll assembly of Figure 2D incorporated into a battery.

Figure 2G shows a number of views of a vent cap assembly.

Figure 2H is a cross section of the jellyroll assembly of Figure 2D incorporated into another battery using another vent cap mechanism.

Figures 3A and 3B show cross-section and top view of two battery cans with reinforced bases.

Figure 4 shows cross-section and top view of a battery can with an additional element used to reinforce the base of the can.

Figure 5 is a flow diagram depicting a method in accord with aspects of the invention.

## DETAILED DESCRIPTION

### A. Overview

The invention is most generally described in terms of rechargeable nickel zinc cells and methods of making them. More specifically the invention is described in terms of rechargeable nickel zinc cells of a configuration that utilizes a positive can with a vent cap at the positive pole of the battery.

Below is a brief discussion of nickel zinc battery chemistry as it relates to the invention, followed by more detailed discussion of battery design with focus on specific features of the present invention.

ELECTROCHEMICAL REACTIONS OF NICKEL ZINC BATTERIES

The charging process for a nickel hydroxide positive electrode in an alkaline electrochemical cell is governed by the following reaction:

$$Ni(OH)_2 + OH^- \rightarrow NiOOH + H_2O + e^- \qquad (1)$$

Alkaline electrolyte acts as ion carrier in the Zn electrode. In the rechargeable Zn electrode, the starting active material is the ZnO powder or a mixture of zinc and zinc oxide powder. The ZnO powder dissolves in the KOH solution, as in reaction (2), to form the zincate ($Zn(OH)_4^{2-}$) that is reduced to zinc metal during the charging process, as in reaction (3). The reaction at the Zn electrode can be written as follows:

$$ZnO + 2OH^- + H_2O \rightarrow Zn(OH)_4^{2-} \qquad (2) \text{ and}$$

$$Zn(OH)_4^{2-} + 2e^- \rightarrow Zn + 4OH^- \qquad (3)$$

Therefore, net electrode at the negative is

$$ZnO + H_2O + 2e^- \rightarrow Zn + 2OH^- + 2e^- \qquad (4)$$

Then, the overall Ni/Zn battery reaction can be expressed as follows:

$$Zn + 2NiOOH + H_2O = ZnO + 2Ni(OH)_2 \qquad (5)$$

In the discharging process of the zinc electrode, the zinc metal donates electrons to form zincate. At the same time, the concentration of the zincate in the KOH solution increases.

Upon recharge, reactions (1)—(5) are repeated. During the life of a nickel zinc battery, these charge-discharge cycles are repeated a number of times.

### B. Embodiments

A more detailed description of nickel zinc batteries of the invention, including description of electrode and components, particularly the embodiments relating to methods of manufacture, follows.

NICKEL-ZINC BATTERY AND BATTERY COMPONENTS

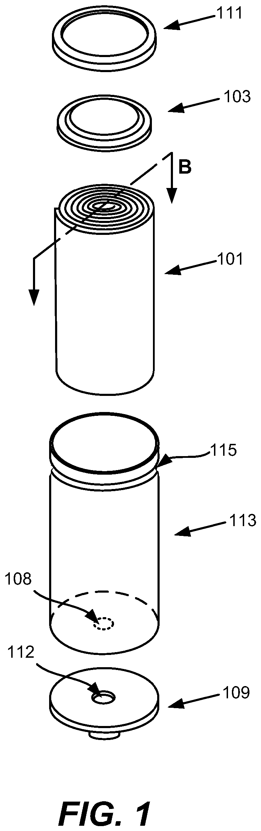

Figure 1 shows an exploded view of a nickel zinc cell in accord with embodiments of the invention. Alternating electrode and electrolyte layers are provided in a cylindrical assembly **101** (also called a "jellyroll"). The cylindrical assembly or jellyroll **101** is positioned inside a can **113** or other containment vessel. The can may be plated on the inside with e.g. tin to aid in electrical conduction. A negative collector disc **103** (e.g. copper, optionally plated with e.g. tin) is attached or otherwise is in electrical communication with the cylindrical assembly **101** once the cell is assembled. The negative collector disc functions as the external negative terminal, with the negative collector disc electrically connected to the negative electrode. The positive electrode end of the jellyroll, the bottom (as depicted), will be in electrical communication with the inside base of the can. In some embodiments, there is an intervening positive collector disc, e.g. nickel foam, between the positive end of the jellyroll and the base of the can. In one embodiment, the positive collector disc is a metal spring. In a more specific embodiment, the metal spring has protrusions that pierce a separator interposed between the metal spring and the positive substrate of the jellyroll.

A portion of flexible gasket **111** rests atop the negative collector disk and a portion also rests on a circumferential bead **115** provided along the perimeter in the upper portion of can **113,** proximate to the cap **109.** The gasket **111** serves to electrically isolate negative collector disc **103** from can **113.**

After the can or other containment vessel is filled with electrolyte, the vessel is sealed to isolate the electrodes and electrolyte from the environment typically by a crimping process using the portion of the can above bead **115** and crimping that annular portion of can **113** inward and over the top portion of gasket **111** and a circumferential portion of negative collector disc **103,** sealing the can shut.

Battery can **113** is the vessel serving as the outer housing or casing of the final cell. In conventional cells, where the can is the negative terminal, it is typically nickel-plated steel. In conventional cells, the can may be either the negative or positive terminal. When the can is positive, the vent cap is on the negative pole; when the can is negative, the vent cap is on the positive pole, i.e. a normal polarity cell. That is, in conventional cells the vent cap is part of the component that seals the open end of the can.

The present invention utilizes a positive can *and* a venting cap at the positive pole, thus a normal polarity cell with a positive can. An aperture in the base of the can is sufficiently aligned with an aperture in a vent cap that is attached to the base of the can. This configuration maintains the vent on the positive terminal for maximum resistance to electrolyte creep which is more prevalent at the negative pole. As mentioned, the jelly roll is inserted into the can and the negative terminal of the cell is connected to a current collector disc that is crimped, with an intervening gasket to electrically isolate the disc from the can, during cell closure. The disc can be readily plated or coated with materials that inhibit the evolution of hydrogen without the difficulty that is associated with the uniform plating of the can interior with such materials. This cell configuration and methods of manufacture thereof, provides at least the following advantages: 1) less tendency for the negative electrode to gas as a result of less surface area contact with plated materials such as the can interior, 2) less tendency for the electrolyte to leak through the vent via a creepage mechanism by locating the vent on the positive terminal, 3) there is no need to plate the can interior with hydrogen inhibiting materials, 4) there is no need to use polymeric sleeves around the jellyroll, 5) vent operation will be more reproducible because the vent assembly is not subject to the stress of the crimping operation, 6) cost savings due to less materials used (as explained in more detail below), and 7) cost savings due to simpler design and thus manufacturing demands are less.

One aspect is a rechargeable nickel zinc cell, including, i) a jellyroll electrode assembly including a nickel positive electrode, a zinc negative electrode, and at least one separator layer disposed between the nickel positive electrode and the zinc negative electrode; ii) a can in electrical communication with the nickel positive electrode, the can including an aperture at the base of the can; iii) a vent cap affixed to the base of the can and in electrical communication with the can, the vent cap configured to vent gas from the rechargeable nickel zinc cell via the aperture; and iv) a negative collector disc in electrical communication with the zinc negative electrode and electrically isolated from the can, the negative collector disc configured as a closure to the open end of the can. More detailed description of jellyroll assemblies suitable for the invention are described below in the section devoted to jellyroll description.

In this application, "can" refers to a battery can, generally but not necessarily, a metal can, e.g. steel or stainless steel. Typically, but not necessarily, the can is plated with nickel. Other cans would suffice, e.g., a polymer based can that is coated with an electrically conductive material would be appropriate in some embodiments of the invention. Also, the term "base of the can" refers to the closed end (or vented end when it includes an aperture) or the battery can's "bottom" (although the invention is not limited to any such orientational constraints). In one embodiment, the can is nickel plated steel.

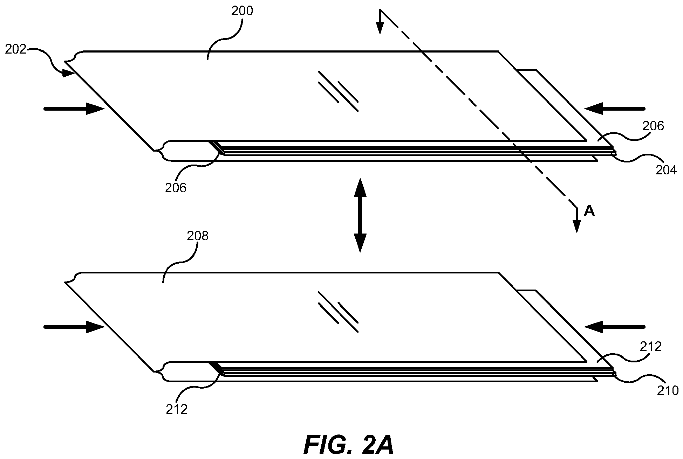

Again referring to Figure 1, the assembly is less complicated than conventional cells. First, conventional cells often have both a negative and a positive collector disc that serve as interior terminals. The cell in Figure 1 has only a negative collector disc serving as an external terminal. However, there are embodiments where positive collector discs, e.g. perforated metal or metal foam, are employed. Also, there is no need for a welded tab to make electrical connection from the jellyroll to the negative collector disk or the base of the can (however there are specific embodiments with analogous tabs). In Figure 1, the battery assembly has jellyroll **101** which as oriented has the negative electrode substrate at least partially exposed at the top end of the jellyroll, and the positive electrode substrate at least partially exposed at the bottom of the jellyroll. More specific description of one embodiment of the configuration of the electrodes in the jellyroll is provided in relation to Figures 2A-D. In this specific embodiment, the negative substrate has an exposed edge spanning the one end (depicted as the top) of the jellyroll and the positive substrate has an exposed edge spanning the other end (depicted here as the bottom) of the jellyroll. That is, the electrodes are wound into the jellyroll starting with offset configuration of the positive and negative layers so that their respective current collectors are exposed on alternative ends of the jellyroll once wound. In some embodiments only a portion of the substrates are exposed on one or both ends of the jellyroll.

Can **113** has an aperture **108** at the base of the can (depicted here as the bottom of the can). The jellyroll is inserted into the can, and negative current collector **103** is placed atop the jellyroll in the can. In one embodiment, the negative collector disc is a metal disc, e.g. copper or brass, coated with a hydrogen evolution resistant material. In one embodiment, the hydrogen resistant material includes at least one of a metal, an alloy and a polymer. In another embodiment, the hydrogen resistant material includes at least one of tin, silver, bismuth, brass and lead. In yet another embodiment, the hydrogen resistant material includes an optionally perfluorinated polyolefin, in a more specific embodiment, Teflon™ (a trade name by E.I. Dupont de Nemours and Company, of Wilmington Delaware, for polytetrafluoroethylene).

Current collector **103** is configured to make electrical communication with the zinc negative electrode, typically via the negative substrate. In one embodiment, which can be employed with respect to any of the embodiments above, electrical communication between the negative collector disc and the zinc negative electrode is made via a welded metal tab. In a specific embodiment, the metal tab is welded to the negative substrate and to the negative current collector. In one embodiment, which can be employed with respect to any of the embodiments above, electrical communication between the negative collector disc and the zinc negative electrode is made via direct contact between the negative collector disc and the negative electrode. In a specific embodiment, the negative substrate, without any welded tab, comes in direct contact with the negative current collector. In embodiments where the negative current collector is coated with a non-electrically conductive material, e.g. the hydrogen evolution resistant material, the substrate is configured to pierce the non-electrically conductive material upon assembly of the cell so as to establish electrical communication. In one embodiment, which can be employed with respect to any of the embodiments above, electrical communication between the negative collector disc and the zinc negative electrode is made via a conductive spring configured to make contact with both the zinc negative electrode and the negative collector disc, the conductive spring is compressed between the end of the jellyroll and the negative collector disc. In a specific embodiment, the conductive spring has protrusions on either or both sides so as to make better electrical communication with the negative substrate and/or the negative current collector. In embodiments where the negative current collector is coated with a non-electrically conductive material, e.g. the hydrogen evolution resistant material, the conductive spring is configured to pierce, e.g. via protrusions emanating from the spring, the non-electrically conductive material upon assembly of the cell so as to establish electrical communication with the negative current collector. In one embodiment, the conductive spring, e.g. metal, is configured to pierce a separator interposed between the spring and the negative substrate of the jellyroll, thereby making electrical communication with the negative substrate. The conductive spring can be a metal spring, or a plastic or other polymeric material coated with a conductive material. Negative current collector **103** serves as a closure element for can **113** once the jellyroll is sealed in the can. In order to electrically isolate the negative current collector from the can (which is positive due to electrical communication (in this example via direct contact) with the positive substrate of the jellyroll)) gasket **111** is placed between the can and current collector prior to crimping the can shut to seal the jellyroll in the can.

As mentioned, in this example the positive substrate of the jellyroll makes direct contact with the end of the can with aperture **108**. Electrolyte can be introduced into the can prior to sealing the jellyroll in the can or after the can is sealed, electrolyte can be introduced to the can via aperture **108.** In one embodiment, which can be employed with respect to any of the embodiments above, a positive collector disc, for example a nickel foam disc, can be interposed between the nickel positive electrode and the base of the can having aperture **108,** thus establishing electrical communication between the positive electrode (substrate) and the can. In one embodiment the positive collector disc includes nickel foam.

In one embodiment, which can be employed with respect to any of the embodiments above, the nickel positive electrode includes a nickel foam substrate impregnated with a mixture of: (a) cobalt oxide, in the range of between about 1% to about 10% by weight in the positive electrode, contained within a nickel oxide matrix; and (b) cobalt metal in the range of about 1% to 10% by weight in the positive electrode. More detailed description of positive electrodes is included in the section specific to the nickel positive electrode below.

In one embodiment, which can be employed with respect to any of the embodiments above, the zinc negative electrode includes: (a) a copper or brass substrate plated with tin or tin/zinc having a thickness of about 40-80 $\mu$In; and, (b) a zinc oxide based electrochemically active layer. In one embodiment, the zinc oxide based electrochemically active layer includes: (a) zinc metal particles coated with at least one of lead and tin; (b) zinc oxide; (c) bismuth oxide; (d) a dispersing agent; and (e) a binding agent. In another embodiment, the zinc oxide based electrochemically active layer includes inorganic fiber, the inorganic fiber including silica and alumina. In yet another embodiment, the zinc oxide based electrochemically active layer includes carbon fiber, with or without surfactant coating. More detailed description of negative electrodes is included in the section specific to the zinc negative electrode below.

In one embodiment, which can be employed with respect to any of the embodiments above, the rechargeable nickel zinc cell contains an alkaline electrolyte, the alkaline electrolyte including: (a) between about 0.025 M and 0.25 M phosphate; (b) between about 4 M and about 9 M free alkalinity; and (c) up to about 1M borate. More detailed description of electrolytes suitable for the invention are included in the section specific to electrolytes below.

Vent cap **109** is attached, e.g. welded, to the end of the can having aperture **108**. Aperture **108** is aligned sufficiently with aperture **112** in the vent cap to allow gas to vent through the adjoining apertures. More detailed description of vent caps suitable for the invention are included in the section specific to vent caps below.

In certain embodiments, the cell is configured to operate in an electrolyte "starved" condition. Further, in certain embodiments, nickel-zinc cells of this invention employ a starved electrolyte format. Such cells have relatively low quantities electrolyte in relation to the amount of active electrode material. They can be easily distinguished from flooded cells, which have free liquid electrolyte in interior regions of the cell. Starved format cells are discussed in US Patent Application, serial no. 11/116,113, filed April 26, 2005, titled "Nickel Zinc Battery Design," published as US 2006-0240317 A1, which is hereby incorporated by reference for all purposes. It may be desirable to operate a cell at starved conditions for a variety of reasons. A starved cell is generally understood to be one in which the total void volume within the cell electrode stack is not fully occupied by electrolyte. In a typical example, the void volume of a starved cell after electrolyte fill may be at least about 10% of the total void volume before fill. Specifically, one embodiment includes aspects of any one embodiment described above, where the cell is configured in an electrolyte starved condition.

The battery cells described herein can have any of a number of different shapes and sizes. For example, cylindrical cells of this invention may have the diameter and length of conventional AAA cells, AA cells, D cells, C cells, etc. Custom cell designs are appropriate in some applications. In a specific embodiment, the cell size is a sub-C cell size of diameter 22 mm and length 43 mm. Note that the present invention also may be employed in relatively small cell formats, as well as various larger format cells employed for various non-portable applications. Often the profile of a battery pack for, e.g., a power tool or lawn tool will dictate the size and shape of the battery cells. One embodiment is a battery pack including one or more nickel-zinc battery cells and appropriate casing, contacts, and conductive lines to permit charge and discharge in an electric device. In a specific embodiment, rechargeable cells are configured to a commercially available size of AAA, AA, C, D or sub-C.

More detailed description of specific cells as well as features of a venting cap, the positive electrode, separator, electrolyte, negative electrode and jellyroll configurations follows.

Venting Cap

Although the cell is generally sealed from the environment, the cell may be permitted to vent gases from the battery that are generated during charge and discharge. Thus in reference for example to Figure 1, cap **109,** although depicted generically, is a venting cap. A typical nickel cadmium cell vents gas at pressures of approximately 200 pounds per square inch (psi). In some embodiments, a nickel zinc cell is designed to operate at this pressure and even higher (e.g., up to about 300 psi) without the need to vent. This may encourage recombination of any oxygen and hydrogen generated within the cell. In certain embodiments, the cell is constructed to maintain an internal pressure of up to about 450 psi and or even up to about 600 psi. In other embodiments, the nickel zinc cell is designed to vent gas at relatively lower pressures. This may be appropriate when the design encourages controlled release of hydrogen and/or oxygen gases without their recombination within the cell.

Some details of the structure of the vent cap are found in the following patent applications

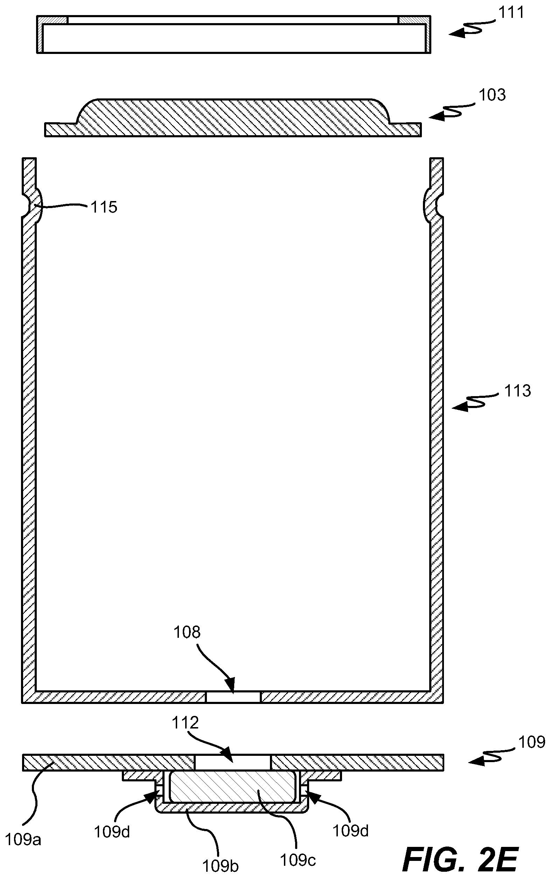

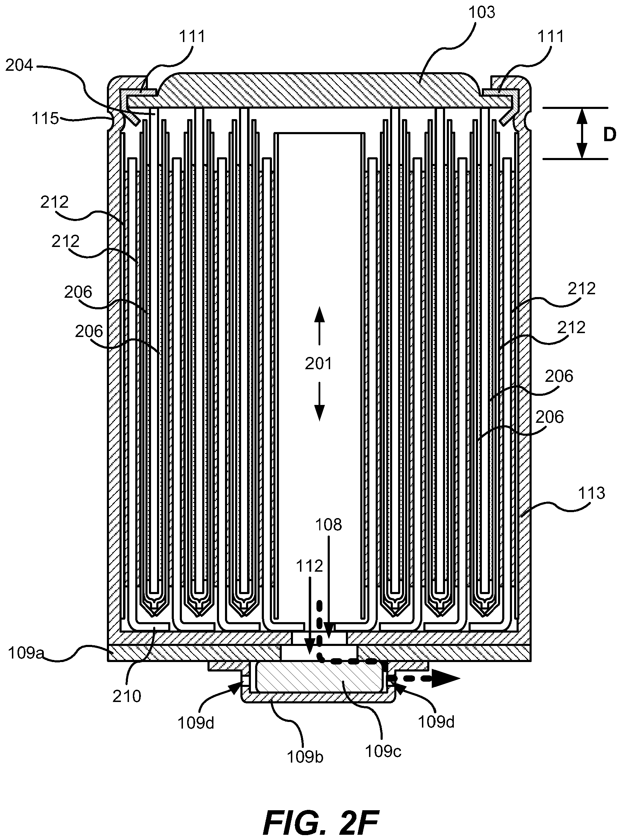

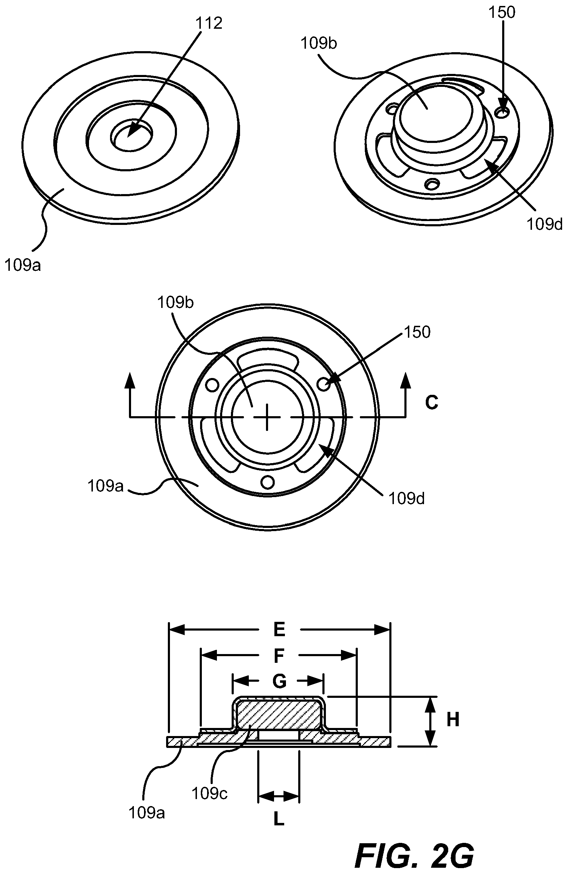

PCT/US2006/015807 filed April 25, 2006 and PCT/US2004/026859 filed August 17, 2004 (publication WO 2005/020353 A3. As well, the vent cap is described in more detail in relation to Figures 2E, 2F and 2G.

The Positive Electrode

The nickel positive electrode generally includes electrochemically active nickel oxide or hydroxide or oxyhydroxide and one or more additives to facilitate manufacturing, electron transport, wetting, mechanical properties, etc. In this application, "nickel oxide" is meant to include active nickel in the form of oxide, oxyhydroxide and/or hydroxide. For example, a positive electrode formulation may include nickel hydroxide particles, zinc oxide, cobalt oxide (CoO), cobalt metal, nickel metal, and a thixotropic agent such as carboxymethyl cellulose (CMC). Note that the metallic nickel and cobalt may be provided as chemically pure metals or alloys thereof. The positive electrode may be made from paste containing these materials and a binder such as a polymeric fluorocarbon (e.g., Teflon™).

In certain embodiments, the nickel hydroxide electrode includes nickel hydroxide (and/or nickel oxyhydroxide), cobalt/cobalt compound powder, nickel powder and binding materials. The cobalt compound is included to increase the conductivity of the nickel electrode. In one embodiment, the nickel positive electrode includes at least one of cobalt oxide, cobalt hydroxide, and/or cobalt oxyhydroxide; optionally coated on nickel hydroxide (or oxyhydroxide) particles.

A nickel foam matrix may be used to support the electro-active nickel oxide (e.g., $Ni(OH)_2$) electrode material. The foam substrate thickness may be may be between 15 and 60 mils. The thickness of the positive electrode, which includes nickel foam filled with the electrochemically active and other electrode materials, ranges from about 16 - 24 mils, preferably about 20 mils thick. In one embodiment, a nickel foam density of about 350 g/m$^2$ and thickness ranging from about 16 — 18 mils is used.

The Separator

Typically, a separator will have small pores. In certain embodiments the separator includes multiple layers. The pores and/or laminate structure may provide a tortuous path for zinc dendrites and therefore effectively bar penetration and shorting by dendrites. Preferably, the porous separator has a tortuosity of between about 1.5 and 10, more preferably between about 2 and 5. The average pore diameter is preferably at most about 0.2 microns, and more preferably between about 0.02 and 0.1 microns. Also, the pore size is preferably fairly uniform in the separator. In a specific embodiment, the separator has a porosity of between about 35 and 55% with one preferred material having 45% porosity and a pore size of 0.1 micron.

In a certain embodiments, the separator includes at least two layers (and preferably exactly two layers) — a barrier layer to block zinc penetration and a wetting layer to keep the cell wet with electrolyte, allowing ionic current to flow. This is generally not the case with nickel cadmium cells, which employ only a single separator material between adjacent electrode layers.

Performance of the cell may be aided by keeping the positive electrode wet and the negative electrode relatively dry. Thus, in some embodiments, the barrier layer is located adjacent to the negative electrode and the wetting layer is located adjacent to the positive electrode. This arrangement improves performance of the cell by maintaining electrolyte in intimate contact with the positive electrode.

In other embodiments, the wetting layer is placed adjacent to the negative electrode and the barrier layer is placed adjacent to the positive electrode. This arrangement aids recombination of oxygen at the negative electrode by facilitating oxygen transport to the negative electrode via the electrolyte.

The barrier layer is typically a microporous membrane. Any microporous membrane that is ionically conductive may be used. Often a polyolefin having a porosity of between about 30 and 80 per cent, and an average pore size of between about 0.005 and 0.3 micron will be suitable. In a preferred embodiment, the barrier layer is a microporous polypropylene. The barrier layer is typically about 0.5 - 4 mils thick, more preferably between about 1.5 and 4 mils thick.

The wetting (or wicking) layer may be made of any suitable wettable separator material. Typically the wetting layer has a relatively high porosity e.g., between about 50 and 85% porosity. Examples include polyamide materials such as nylon-based as well as wettable polyethylene, polypropylene and cellulose-based materials. One particular material is cellulose impregnated and/or coated with polyvinylalcohol. In certain embodiments, the wetting layer is between about 1 and 10 mils thick, more preferably between about 3 and 6 mils thick. Examples of separate materials that may be employed as the wetting material include NKK VL100 (NKK Corporation, Tokyo, Japan), Freudenberg FS2213E, Scimat 650/45 (SciMAT Limited, Swindon, UK), and Vilene FV4365.

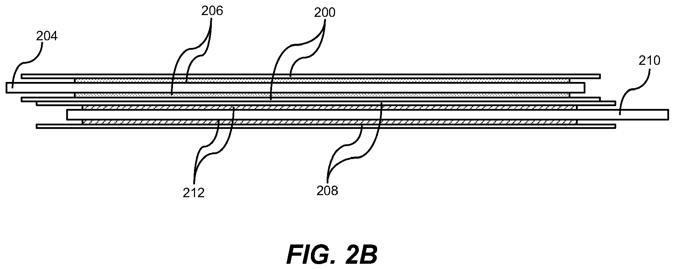

Other separator materials known in the art may be employed. As indicated, nylon-based materials and microporous polyolefins (e.g., polyethylenes and polypropylenes) are very often suitable. In one embodiment, separators are selectively sealed so that the electrodes are further isolated from one another. Virtually any separator material will work so long as it can be sealed via application of one of the heat sources described herein. In some embodiments of the invention, separator materials of differing melting points are employed, in other embodiments separators that seal are employed in conjunction with those that do not seal under the conditions to which one or both ends of the jellyroll are exposed. These specific embodiments will be described in more detail below in relation to Figures 2B - 2D.

Another consideration in the electrode/separator design is whether to provide the separator as simple sheets of approximately the same width as the electrode and current collector sheet or to encase one or both electrodes in separator layers. In the latter example, the separator serves as a "bag" for one of the electrode sheets, effectively encapsulating an electrode layer. In some embodiments, enveloping the negative electrode in a separator layer will aid in preventing dendrite formation. Specific heat sealing embodiments are described in more detail below in relation to the section entitled, "Electrodes and Separator Assembly - The Jellyroll."

The Electrolyte

In certain embodiments pertaining to nickel-zinc cells, the electrolyte composition limits dendrite formation and other forms of material redistribution in the zinc electrode. Examples of suitable electrolytes are described in U.S. Patent No. 5,215,836 issued to M. Eisenberg on June 1, 1993, which is hereby incorporated by reference. In some cases, the electrolyte includes (1) an alkali or earth alkali hydroxide, (2) a soluble alkali or earth alkali fluoride, and (3) a borate, arsenate, and/or phosphate salt (e.g., potassium borate, potassium metaborate, sodium borate, sodium metaborate, and/or a sodium or potassium phosphate). In one specific embodiment, the electrolyte includes about 4.5 to 10 equiv/liter of potassium hydroxide, from about 2 to 6 equiv/liter boric acid or sodium metaborate and from about 0.01 to 1 equivalents of potassium fluoride. A specific preferred electrolyte for high rate applications includes about 8.5 equiv/liter of hydroxide, about 4.5 equivalents of boric acid and about 0.2 equivalents of potassium fluoride.

The invention is not limited to the electrolyte compositions presented in the Eisenberg patent. Generally, any electrolyte composition meeting the criteria specified for the applications of interest will suffice. Assuming that high power applications are desired, then the electrolyte should have very good conductivity. Assuming that long cycle life is desired, then the electrolyte should resist dendrite formation. In the present invention, the use of borate and/or fluoride containing KOH electrolyte along with appropriate separator layers reduces the formation of dendrites thus achieving a more robust and long-lived power cell.

In a specific embodiment, the electrolyte composition includes an excess of between about 3 and 5 equiv/liter hydroxide (e.g., KOH, NaOH, and/or LiOH). This assumes that the negative electrode is a zinc oxide based electrode. For calcium zincate negative electrodes, alternate electrolyte formulations may be appropriate. In one example, an appropriate electrolyte for calcium zincate has the following composition: about 15 to 25% by weight KOH, about 0.5 to 5.0% by weight LiOH.

According to various embodiments, the electrolyte may include a liquid and a gel. The gel electrolyte may include a thickening agent such as CARBOPOL™ available from Noveon of Cleveland, OH. In a preferred embodiment, a fraction of the active electrolyte material is in gel form. In a specific embodiment, about 5-25% by weight of the electrolyte is provided as gel and the gel component includes about 1-2% by weight CARBOPOL™.

In some cases, the electrolyte may contain a relatively high concentration of phosphate ion as discussed in US Patent 7,550,230, entitled "Electrolyte Composition for Nickel Zinc Batteries," filed February 1, 2006, by J.Phillips and S. Mohanta.

The Negative Electrode

As applied to nickel-zinc cells, the negative electrode includes one or more electroactive sources of zinc or zincate ions optionally in combination with one or more additional materials such as surfactant-coated particles of the invention, corrosion inhibitors, wetting agents, etc. as described below. When the electrode is fabricated it will be characterized by certain physical, chemical, and morphological features such as coulombic capacity, chemical composition of the active zinc, porosity, tortuosity, etc.

In certain embodiments, the electrochemically active zinc source may include one or more of the following components: zinc oxide, calcium zincate, zinc metal, and various zinc alloys. Any of these materials may be provided during fabrication and/or be created during normal cell cycling. As a particular example, consider calcium zincate, which may be produced from a paste or slurry containing, e.g., calcium oxide and zinc oxide.

Active material for a negative electrode of a rechargeable zinc alkaline electrochemical cell may include zinc metal (or zinc alloy) particles. If a zinc alloy is employed, it may in certain embodiments include bismuth and/or indium. In certain embodiments, it may include up to about 20 parts per million lead. A commercially available source of zinc alloy meeting this composition requirement is PG101 provided by Noranda Corporation of Canada. In one embodiment, the electrochemically active zinc metal component of nickel zinc cells contains less than about 0.05% by weight of lead. Tin may also be used in the zinc negative electrode.

In certain embodiments, the zinc metal particles may be coated with tin and/or lead. The zinc particles may be coated by adding lead and tin salts to a mixture containing zinc particles, a thickening agent and water. The zinc metal can be coated while in the presence of zinc oxide and other constituents of the electrode. A zinc electrode containing lead or tin coated zinc particles is generally less prone to gassing when cobalt is present in the electrolyte. The cycle life and shelf life of the cells is also enhanced, as the zinc conductive matrix remains intact and shelf discharge is reduced. Exemplary active material compositions suitable for negative electrodes of this invention are further described in U.S. patent application, serial number 12/467,993, entitled "Pasted Zinc Electrode for Rechargeable Nickel-Zinc Batteries," by J. Phillips et. al., filed May 18, 2009.

The zinc active material may exist in the form of a powder, a granular composition, fibers, etc. Preferably, each of the components employed in a zinc electrode paste formulation has a relatively small particle size. This is to reduce the likelihood that a particle may penetrate or otherwise damage the separator between the positive and negative electrodes.

Considering the electrochemically active zinc components in particular (and other particulate electrode components as well), such components preferably have a particle size that is no greater than about 40 or 50 micrometers. In one embodiment the particle size is less than about 40 microns, i.e. the average diameter is less than about 40 microns. This size regime includes lead coated zinc or zinc oxide particles. In certain embodiments, the material may be characterized as having no more than about 1% of its particles with a principal dimension (e.g., diameter or major axis) of greater than about 50 micrometers. Such compositions can be produced by, for example, sieving or otherwise treating the zinc particles to remove larger particles. Note that the particle size regimes recited here apply to zinc oxides and zinc alloys as well as zinc metal powders.

In addition to the electrochemically active zinc component(s), the negative electrode may include one or more additional materials that facilitate or otherwise impact certain processes within the electrode such as ion transport, electron transport (e.g., enhance conductivity), wetting, porosity, structural integrity (e.g., binding), gassing, active material solubility, barrier properties (e.g., reducing the amount of zinc leaving the electrode), corrosion inhibition etc.

Various organic materials may be added to the negative electrode for the purpose of binding, dispersion, and/or as surrogates for separators. Examples include hydroxylethyl cellulose (HEC), carboxymethyl cellulose (CMC), the free acid form of carboxymethyl cellulose (HCMC), polytetrafluoroethylene (PTFE), polystyrene sulfonate (PSS), polyvinyl alcohol (PVA), nopcosperse dispersants (available from San Nopco Ltd. of Kyoto Japan), etc.

In certain embodiments, polymeric materials such as PSS and PVA may be mixed with the paste formation (as opposed to coating) for the purpose of burying sharp or large particles in the electrode that might otherwise pose a danger to the separator.

When defining an electrode composition herein, it is generally understood as being applicable to the composition as produced at the time of fabrication (e.g., the composition of a paste, slurry, or dry fabrication formulation), as well as compositions that might result during or after formation cycling or during or after one or more charge-discharge cycles while the cell is in use such as while powering a portable tool.

Various negative electrode compositions within the scope of this invention are described in the following documents PCT Publication No. WO 02/39517 (J. Phillips), PCT Publication No. WO 02/039520 (J. Phillips), PCT Publication No. WO 02/39521, PCT Publication No. WO 02/039534 and (J. Phillips), US Patent Publication No. 2002182501. Negative electrode additives in the above references include, for example, silica and fluorides of various alkaline earth metals, transition metals, heavy metals, and noble metals.

Finally, it should be noted that while a number of materials may be added to the negative electrode to impart particular properties, some of those materials or properties may be introduced via battery components other than the negative electrode. For example, certain materials for reducing the solubility of zinc in the electrolyte may be provided in the electrolyte or separator (with or without also being provided to the negative electrode). Examples of such materials include phosphate, fluoride, borate, zincate, silicate, stearate. Other electrode additives identified above that might be provided in the electrolyte and/or separator include surfactants, ions of indium, bismuth, lead, tin, calcium, etc.

For example, in some embodiments, the negative electrode includes an oxide such as bismuth oxide, indium oxide, and/or aluminum oxide. Bismuth oxide and indium oxide may interact with zinc and reduce gassing at the electrode. Bismuth oxide may be provided in a concentration of between about 1 and 10% by weight of a dry negative electrode formulation. It may facilitate recombination of oxygen. Indium oxide may be present in a concentration of between about 0.05 and 1% by weight of a dry negative electrode formulation. Aluminum oxide may be provided in a concentration of between about 1 and 5% by weight of a dry negative electrode formulation.

In certain embodiments, one or more additives may be included to improve corrosion resistance of the zinc electroactive material and thereby facilitate long shelf life. The shelf life can be critical to the commercial success or failure of a battery cell. Recognizing that batteries are intrinsically chemically unstable devices, steps may be taken to preserve battery components, including the negative electrode, in their chemically useful form. When electrode materials corrode or otherwise degrade to a significant extent over weeks or months without use, their value becomes limited by short shelf life.

Specific examples of anions that may be included to reduce the solubility of zinc in the electrolyte include phosphate, fluoride, borate, zincate, silicate, stearate, etc. Generally, these anions may be present in a negative electrode in concentrations of up to about 5% by weight of a dry negative electrode formulation. It is believed that at least certain of these anions go into solution during cell cycling and there they reduce the solubility of zinc. Examples of electrode formulations including these materials are included in the following patents and patent applications: U.S. Patent No. 6,797,433, issued September 28, 2004, titled, "Negative Electrode Formulation for a Low Toxicity Zinc Electrode Having Additives with Redox Potentials Negative to Zinc Potential," by Jeffrey Phillips; U.S. Patent No. 6,835,499, issued December 28, 2004, titled, "Negative Electrode Formulation for a Low Toxicity Zinc Electrode Having Additives with Redox Potentials Positive to Zinc Potential," by Jeffrey Phillips; U.S. Patent No. 6,818,350, issued November 16, 2004, titled, "Alkaline Cells Having Low Toxicity Rechargeable Zinc Electrodes," by Jeffrey Phillips; and PCT/NZ02/00036 (publication no. WO 02/075830) filed March 15, 2002 by Hall et al.

Conductive fibers added to the negative electrode may also serve the purpose of irrigating or wetting the electrode. Surfactant coated carbon fibers are one example of such material. However, it should be understood that other materials may be included to facilitate wetting. Examples of such materials include titanium oxides, alumina, silica, alumina and silica together, etc. Generally, when present, these materials are provided in concentrations of up to about 10% by weight of a dry negative electrode formulation. A further discussion of such materials may be found in U.S. Patent No. 6,811,926, issued November 2, 2004, titled, "Formulation of Zinc Negative Electrode for Rechargeable Cells Having an Alkaline Electrolyte," by Jeffrey Phillips, which is incorporated herein by reference for all purposes.

Zinc negative electrodes contain materials that establish conductive communication between the electrochemically active component of the zinc negative electrode and the nickel positive electrode. The inventors have found that introduction of surfactant-coated particles into the negative electrode increases the overall current carrying capability of the electrode, particularly surfactant coated carbon particles, as described in US Patent Application, serial number 12/852,345, filed August 6, 2010, titled, "Carbon Fiber Zinc Negative Electrode," by Jeffrey Phillips.

As mentioned, a slurry/paste having a stable viscosity and that is easy to work with during manufacture of the zinc electrode may be used to make the zinc negative electrode. Such slurry/pastes have zinc particles optionally coated by adding lead and tin salts to a mixture containing the zinc particles, a thickening agent and a liquid, e.g. water. Constituents such as zinc oxide (ZnO), bismuth oxide ($Bi_2O_3$), a dispersing agent, and a binding agent such as Teflon™

are also added. Binding agents suitable for this aspect include, but are not limited to, P.T.F.E., styrene butadiene rubber, polystyrene, and HEC. Dispersing agents suitable for this aspect include, but are not limited to, a soap, an organic dispersant, an ammonium salt dispersant, a wax dispersant. An example of commercially available dispersants in accord with this aspect is a Nopcosperse™ (trade name for a liquid series of dispersants available from Nopco Paper Technology Australia Pty. Ltd.). Liquids suitable for this aspect include, but are not limited to, water, alcohols, ethers and mixtures thereof.

The Electrodes and Separator Assembly - The Jellyroll

To make a jellyroll, individual electrode layer assemblies are sandwiched between one or more layers of separator materials. The sandwiched electrode assemblies are stacked and then wound into a jellyroll.

Figure 2A is a perspective representation showing assembly of electrodes and separator layers prior to winding into a jellyroll. The electrodes and separator layers are made of the materials described herein. In the illustrated example, separators (200 and 208) are initially folded over each of the negative electrode (conductive substrate 204 coated on each face with electrochemically active layer 206) and the positive electrode (conductive substrate 210 coated on each face with electrochemically active layer 212) along the electrode's planar surface before being drawn or fed, with the electrode sheets, into a winding apparatus. In this embodiment, each separator sheet is a bifold, where each of the electrodes is inserted (as indicated by the horizontal arrows) into the bifold substantially to fold 202. In this approach two sources of separator are employed. In an alternative embodiment, each electrode sheet is straddled by two separate sources of separator sheet so that four sources of separator, rather than two are employed. Thus, initially, a separator sheet is not folded over the leading edge of an electrode, but the resulting layered structure is the same. However, the bifold separators make insertion and control of the stack easier when inserting into a winding apparatus. Both approaches produce a structure in which two layers of separator separate each electrode layer from the next adjacent electrode layer. This is generally not the case with nickel cadmium cells, which employ only a single layer of separator between adjacent electrode layers. The additional layers employed in the nickel zinc cell help to prevent shorting that could result from zinc dendrite formation, and when a wicking separator is used, also aid in irrigation and ion current flow.

Dendrites are crystalline structures having a skeletal or tree-like growth pattern ("dendritic growth") in metal deposition. In practice, dendrites form in the conductive media of a power cell during the lifetime of the cell and effectively bridge the negative and positive electrodes causing shorts and subsequent loss of battery function.

Note that the separator sheets generally do not entirely cover the full widths of the electrode sheets. Specifically, one edge (the conductive substrate) of each electrode sheet remains exposed for attaching terminals or otherwise establishing electrical communication with a terminal of the battery once complete. In this particular embodiment, these exposed edges are on opposite sides so that once the jellyroll is wound, each of the positive and the negative electrodes will make electrical contact with the battery terminals at opposite ends of the battery. The exposed edges can be on the same side so that the electrical connections to the battery terminals are both made via the same end of the jellyroll without exceeding the scope of the invention, however, it is more convenient to have the exposed substrate on opposite ends of the jellyroll. In the embodiment where the exposed substrate edges are on opposite ends of the jellyroll, all of each of the respective edges need not be exposed. That is, a portion of the edges may be used to make contact with, for example, a current collector disk or metal tab, while the remaining portion is unexposed or otherwise protected. In a particular embodiment, substantially all of each edge of each electrode substrate is exposed in order to maximize contact with a current collector or the can for efficient current collection.

Figure 2B is a cross section (as indicated by cut A in Figure 2A) of the assembly formed by stacking (as indicated by the heavy double-headed arrow in Figure 2A) the individual electrodes with their respective separators in Figure 2A. Separator 200 mechanically and electrically separates the negative electrode (substrate 204 and electrochemically active layers 206) from the positive electrode (substrate 210 and electrochemically active layers 212) while allowing ionic current to flow between the electrodes. In this embodiment, separator 200 is microporous polypropylene, but the invention is not so limited. As mentioned, the electrochemically active layers 206 of the zinc negative electrode typically include zinc oxide and/or zinc metal as the electrochemically active material and may contain surfactant-coated particles as described above. The layer 206 may also include other additives or electrochemically active compounds such as calcium zincate, bismuth oxide, aluminum oxide, indium oxide, hydroxyethyl cellulose, and a dispersant.

The negative electrode substrate 204 should be electrochemically compatible with the negative electrode materials 206. As described above, the electrode substrate may have the structure of a perforated metal sheet, an expanded metal, a metal foam, or a patterned continuous metal sheet. In some embodiments, the substrate is simply a metal layer such as a metal foil. In a particular embodiment, the negative substrate is copper plated with tin and/or lead.

Opposite from the negative electrode on the other side of separator 200 is the positive electrode and separator 208. In this embodiment, separator 208 is a cellulose-based material, more specifically cellulose impregnated and/or coated with polyvinylalcohol, but the invention is not so limited. This layer is a wicking layer (e.g. from NKK, as is discussed in more detail in the separator section above). The positive electrode also includes electrochemically active layers 212

and an electrode substrate **210.** The layers **212** of the positive electrode may include nickel hydroxide, nickel oxide, and/or nickel oxyhydroxide as electrochemically active materials and various additives, all of which are described herein. The electrode substrate **210** may be, for example, a nickel metal foam matrix or nickel metal sheets. Note that if a nickel foam matrix is used, then layers **212** would form one continuous electrode because they fill the voids in the metal foam and pass through the foam. The layered zinc negative electrode and nickel positive electrode structure is wound into a jellyroll as depicted in Figure 1, structure **101.**

As seen from Figure 2B, conductive substrates **204** and **210** are offset laterally so that once the jellyroll is wound, each of the electrodes will be exposed sufficiently to make electrical connection to the battery terminals at opposite ends of the jellyroll.

A winding apparatus draws the various sheets in at the same time and rolls them into a jellyroll assembly. After a cylinder of sufficient thickness is produced, the apparatus cuts the layers of separator and electrodes to produce the finished jellyroll assembly **101,** as in Figure 1.

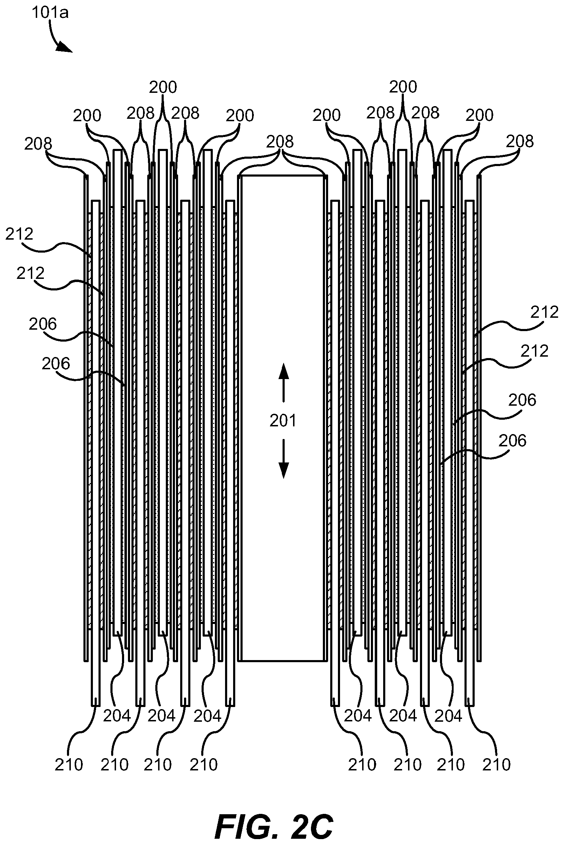

Figure 2C is a cross-section (cut **B** as shown in Figure 1) of jellyroll **101,** specifically where the jellyroll is made by winding the stack structure as described in Figure 2B. Void **201** is formed when the mandrel of the winding device is removed after the jellyroll is wound. Void **201** serves as an electrolyte reservoir, or where the cell is configured in a starved state, the void is a passage for gas to vent. One aspect is a method of selectively sealing a first set of separator layers disposed on both sides of and extending past an edge of a first electrode of a jellyroll assembly including two electrodes, while not sealing a second set of separator layers disposed on both sides of and extending past an edge, parallel and proximate to the edge of the first electrode, of a second electrode, both edges disposed on the same end of the jellyroll assembly, while exposing the same end of the jellyroll assembly to a heat source. The Figure 2C cross section of jellyroll **101** shows that there are alternating layers of separator-sandwiched electrodes as described in relation to Figure 2B. Importantly, the separator materials protrude past the electrochemically active materials on each electrode, and each of the conductive substrates protrude from the end of the jellyroll, on one end, further than the separator material so that electrical connection can be made to the battery terminals. In this example, the negative current collecting substrate **204** protrudes past the electroactive and separator materials at one end (the top as depicted) of the jellyroll, while the positive current collecting substrate **210** protrudes past the electroactive and separator materials at the other end (the bottom as depicted) of the jellyroll. Negative substrate **204** will connect to negative current collector **103,** and positive substrate **210** will make contact with the base of can **113,** when the battery is assembled as depicted in Figure 1. This jellyroll configuration is well suited to selectively seal only one electrode, of two, at either or both ends of a jellyroll. Note that separators, in this example, polypropylene separator **200** and wicking separator **208** are adjoining except for on the outside of the jellyroll, and in the interior of void **201.** Note also that at the bottom of the jellyroll separator **200** does not extend as far down as separator **208** - in embodiments were both separators **200** and **208** were to be sealed over the negative electrode, this configuration would allow enough of separator **208** to melt over or combine with **200** when it is sealed. Also configuring **208** to be longer at the bottom of the jellyroll is done because electrode substrate **210** extends further down as well, so if sealing is not complete, **210** is further protected by **208.** Analogously, at the top of the jellyroll separator **200** extends further upward than **208,** because substrate **204** extends further than substrate **210** and thus **204** is further protected by separator **200.**

In one embodiment, selectively sealing the first set of separator layers includes: i) configuring the current collecting substrate of the second electrode so that when the heat source is applied to the same end of the jellyroll assembly, the first set of separator layers can seal to envelop the first electrode, but the second set of separator layers are physically obstructed from sealing and enveloping the second electrode; and ii) applying the heat source to the same end of the jellyroll assembly. In this example, heat sealing is done at the end (the bottom as depicted) of the jellyroll where current collector substrate 210 protrudes beyond the separator layers.

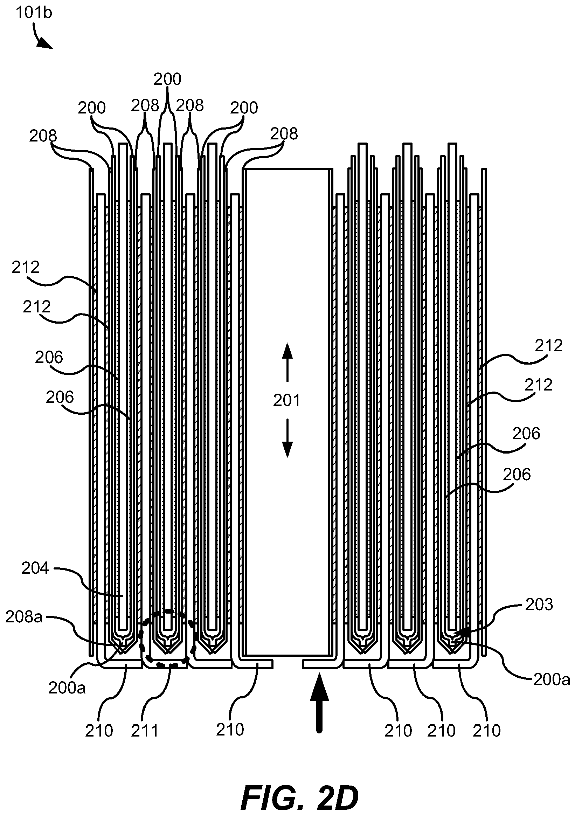

In one embodiment, configuring the current collecting substrate of the second electrode includes folding the current collecting substrate of the second electrode substantially over, but not touching, the current collecting substrate of the first electrode, so that a substantially enclosed volume is formed, where the first set of separator layers and adjoining separator layers from the second set of separator layers are disposed in the substantially enclosed volume. Figure 2D depicts a cross section of jellyroll **101a** after current collecting substrate **210** has been folded over and heat applied to that end of the jellyroll to heat seal the negative electrode (which includes current collector **204** and electrochemically active material **206).** Folding can be done manually or with, e.g., a rolling machine that grasps the jellyroll assembly and applies a roller (from outer edge of jellyroll towards inner edge in this example) to fold the current collector over as depicted.

Referring again to Figure 2D, after collector **210** is folded over, a volume **211** is formed (as indicated by the heavy dotted circle) where the separator materials at the end of the assembly are surrounded by the positive current collector **210** on three sides, the vertical walls and the bent over portion of collector **210.** When configured in this way, and when heat is applied to the bottom end of the jellyroll (as indicated by the heavy upward arrow) on the folded over outer surfaces of current collector **210,** the polypropylene separator melts and fuses to form a continuous layer as indicated at fusion point **200a.** The configuration of current collector **210** serves at least three purposes in this example.

The foldover allows transmission of heat to volume **211** (essentially a small oven). The extension of **210** beyond the separator materials physically blocks separator material **208** from sealing (if it were sealable) with more of **208** across barrier **210.** Finally, the extension past the separators also allows electrical communication of the current collector with the can (e.g. via current collecting disc **105)** and the foldover maximizes electrical contact with the can or current collector disc.

Once this seal is formed, a small volume, **203,** can be formed which, along with the foldover, saves valuable space in the battery assembly so that more electroactive material can be used (because effectively the electrodes can be taller). In this example, as indicated by **208a,** wicking layers from the next nearest positive wind do not fuse because it is a cellulose based material and does not melt (although it may deform as depicted). Heat sealing used for cells described herein are not limited in this way. In some embodiments, both separators (or in some embodiments more than two separator layers) are made of material that can fuse to form a double seal over one of the electrodes. That is, if the two different separator materials are compatible to melt together they may form a single layer fused end, but double thick. If the two different separator materials are not compatible to melt together, a bilayer seal is formed. In this embodiment, the current collectors are configured so that when a sealing heat is applied, only one of the electrodes can be encapsulated because there is a physical barrier preventing the other electrode, in this example the positive, from being sealed under the separator (although seals **200a** in volumes **211** protect the positive from contamination).

The jellyroll, once wound, has the positive electrode layer (along with separator) on the final wind on the outside of the jelly roll. Although the invention is not limited in this way, in this configuration the nickel plated can interior is further isolated from the negative electrode and thus there is no need to coat the interior of the can with hydrogen evolution resistant materials, for example, negative current collector **103** can alone be coated.

Figure 2E is a cross section showing gasket **111,** negative current collector **103,** can **113,** and vent cap **109** in an exploded view. Cells will include these components, along with the jellyroll (not depicted). This simple and elegant design, as mentioned, addresses many drawbacks associated with more complex configurations. As mentioned, additional components can be added, for example, a positive current collecting disc inside the can at the base of the can, one or more metal tabs, e.g. welded to the substrate, to make electrical connection to the can and/or the negative current collector, and the like. However, in its simplest form, the components depicted in Figure 2E, along with the jellyroll and electrolyte, are combined to make an improved rechargeable nickel zinc cell. For assembly, the jellyroll is introduced into can **113** with the exposed positive substrate end toward the base of the can and the negative substrate exposed end toward the open end of the can. Next, negative current collector **103** is introduced into can **113** atop the jellyroll, where electrical connection is made either directly with the negative substrate or via, for example, a metal tab welded to the substrate. Gasket **111** is introduced over and around negative current collector **103,** followed by crimping the can at the open end, for example above circumferential indentation **115** to seal the can, while insulating the can from negative current collector **103** via interposed gasket **111.** Vent cap **109** is attached, e.g. welded, to can **113** so that there is some overlap with apertures **108** and **112** to allow venting of gas from the can through the vent mechanism (described below) of vent cap **109.** Vent cap **109** can be attached prior to insertion of the jellyroll and sealing the can, and in one embodiment, this is the order of assembly.

Figure 2E shows more detail of vent cap **109.** The vent cap includes a base disc **109a** and a cap **109b,** each made of conductive materials described above in the vent section. Cap **109b** is affixed to base disc **109a** and houses septum **109c,** which is made of an elastomeric material that allows gas to vent via apertures **108** and **112** once the cell is assembled. When sufficient pressure is reached, gas passes between septum **109c** and base disc **109a** and vents through one or more apertures **109d,** in this example on the side of cap **109b.** Depending on the material used for the septum and the pressure applied by the cap which holds down the septum, pressures such as those described above in the vent section can be maintained and appropriately vented without undue leakage of electrolyte, especially when the cells are in starved configuration as described above.

Figure 2F depicts the selectively heat sealed jellyroll assembly **101a,** as depicted in Figure 2D, incorporated into a final battery assembly analogous to that described in Figures 1 and 2E. The invention is not so limited, for example, jellyroll **101a** as depicted in Figure 2C is also a suitable jellyroll for cells of the invention. Figure 2E is an exemplary cell that incorporates selective separator sealing, a negative collector disk serving as the closure of and electrically insulated from a positive can, and a vent cap affixed to the positive can as described above. In this embodiment, the inside base of can **113** makes direct contact with the folded over surface of positive substrate **210** for improved current transfer. In another embodiment, a current collector is inserted between the bottom of the jellyroll and the bottom of the can. This configuration can aid contact if welded to the can base and also can be used as a can reinforcement (see further discussion below). Such positive current collectors can incorporate, for example, small spikes or other protrusions that enhance electrical contact. Substrate **204** makes contact with, and thus is in electrical communication with, negative current collector disc **103.**

While not wishing to be bound to theory, it is believed that electrical shorts due to particle contamination are more likely when current collecting substrates are folded over and thus, in this example, positive substrate **210** is in direct line of sight with negative current collecting substrate **204.** Sealing e.g. in this case the negative electrode prevents particles causing shorts between the electrodes at the end of the jellyroll with such heat sealing. At the end of jellyroll **101,** where the negative substrate **204** makes electrical contact with negative current collector disc **103,** substrates **204** and **210** are not in direct line of sight and therefore for any dendrite growth would have to migrate from electrochemically active material **206,** up and over both separator layers **200** and **208,** and down again to substrate **210** in order to cause a short. Thus the electrodes are configured is such a way that the electrodes are not in direct line of sight with each other and the difference in height, **D,** between the electrodes is sufficiently different, coupled with the separators forming a traversal barrier obviates the need to seal separators at this end of the jellyroll. The invention is not so limited however. In some embodiments, the electrodes and separators of the jellyroll are configured so that selective sealing of one of the two electrodes is done on both ends of the jellyroll, for example where it is desirable to minimize the relative distance between the positive and negative electrodes at both ends of the jellyroll. A more detailed description of selective sealing of separator layers is contained in US non-provisional patent application entitled, "Heat Sealing Separators for Nickel Zinc Cells, serial number 12/877,841, filed September 8th, 2010, by McKinney et. al . One embodiment is a cell as described herein including a positive can and vent cap, including a jellyroll as described in US patent application 12/877,841.

Figure 2G shows another example of vent cap **109,** with the individual components listed as in Figure 2E. Shown are perspective views of the bottom and top, in the middle of the figure is a top view, and finally a cross section as indicated by cut **C** is at the bottom of Figure 2G. In this example, cap **109b** is spot welded in three places, **150,** to base disc **109a.** In this example, apertures **109d** are not in the sides of the cap, but rather part of the base of the cap so when sufficient pressure is reached, gas passes between septum **109c** and base disc **109a** and vents through one or more apertures **109d,** as previously described. The cross section in Figure 2F shows exemplary dimensions for the vent cap when used, e.g., for AA commercial cells. In this example, dimension **E** is 12.96 + 0.03 mm, dimension **F** is 9.00 + 0.05 mm, dimension **G** is 5.30 + 0.05 mm, dimension **H** is 2.85 $\pm$ 0.05 mm, and dimension **L** is 2.40 $\pm$ 0.20 mm.

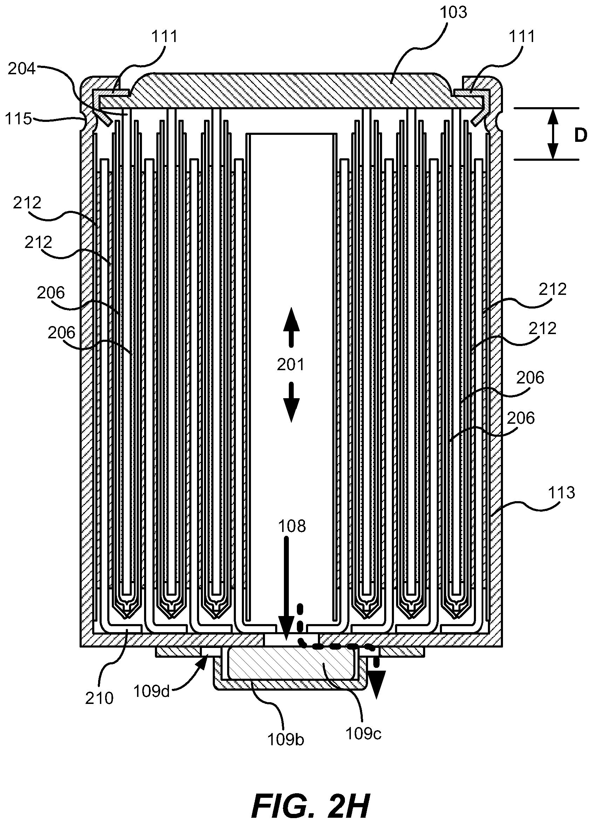

Figure 2H depicts another exemplary cell of the invention. In this example, the jellyroll assembly is the same as described as in relation to Figure 2F. The difference is that the vent cap does not have a base disc **109a,** as described in Figure 2G, but rather cap **109b** is spot welded directly to the base of can **113.** Cap **109b** holds septum **109c** against aperture **108** and thus seals the aperture until sufficient pressure is reached in the can so that gas is vented between the septum and the can and vents via apertures **109d,** which are the same as in Figure 2G, except that the outside surface of the base of the can serves as the base disc. In this embodiment, there is no need for a circumferential seal between the base disc and the can as in the embodiment described in relation to Figure 2F. Here, the septum makes the appropriate seal against aperture **108** and cap **109b** need only be spot welded, for example, at three points to securely attach the cap, seal the battery and form the vent mechanism. The spot welds also form good electrical communication between the can and the vent cap, although other welds or forms of attachment are contemplated. For example there may be a non-electrically communicating method of attachment for providing the structural component of holding the cap to the can, while electrical connection is made from the cap to the can via other means, e.g., a welded tab between the vent cap and base of the can.

Thus for this invention, "a vent cap" is meant to encompass a vent mechanism that is formed using the base of the can, e.g. as described in relation to Figure 2H, or a vent mechanism that is distinct from and complete prior to attachment to the base of the can, e.g. as described in relation to Figures 2F and 2G.

One of ordinary skill in the art would appreciate that although the cell depicted in Figure 2H is a relatively simple assembly of jellyroll, negative collector, can, vent and appropriate seals, the invention also encompasses cells with, for example, a positive collector disc (e.g. nickel foam) interposed between the base of the can and the positive pole of the jellyroll, a conductive spring interposed between the negative collector disc and the negative pole of the jellyroll, a metal tab (e.g. welded) for electrical communication between the negative pole of the jellyroll and the negative collector disc, and the like.

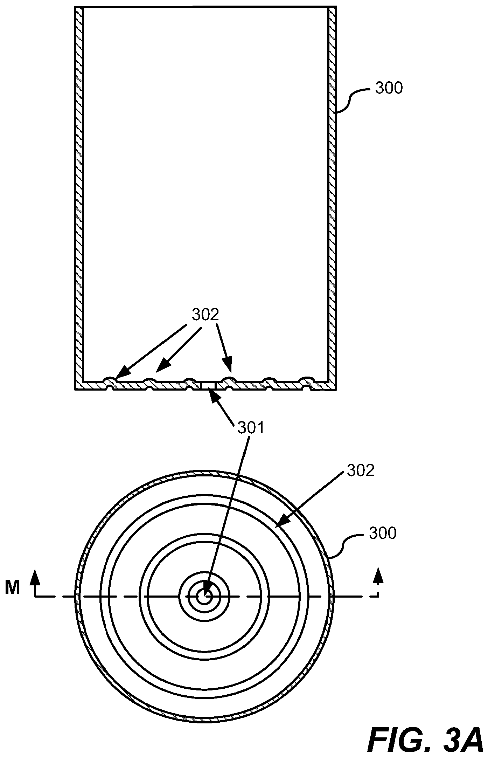

According to the present invention the battery can is reinforced to provide additional rigidity as against shape change and other forces the cell encounters. In one embodiment, the can is thicker at the base than at the sidewall, or of sufficient thickness, to withstand forces exerted on the can, for example, shape change and/or gas pressure. In another embodiment, the base of the can is reinforced. Figure 3A depicts one example of a reinforced battery can. Can **300** has annular ridges, **302,** pressed into the material used to construct the can. The top rendering is length-wise (as indicated by cut **M)** cross-section of can **300** and the bottom rendering is a top view looking down into can **300.** For example, if steel is used for the can, these ridges can be part made as part of a stamping process that produces the can. In another example, if the can is made of a polymeric material, the ridges can be constructed as part of a blow-molding process used to make the can. Two-piece cans are not outside the scope of the invention, that is, for example, a ridged bottom made of metal can be fused with a polymeric tube to construct a battery can analogous to **300.**

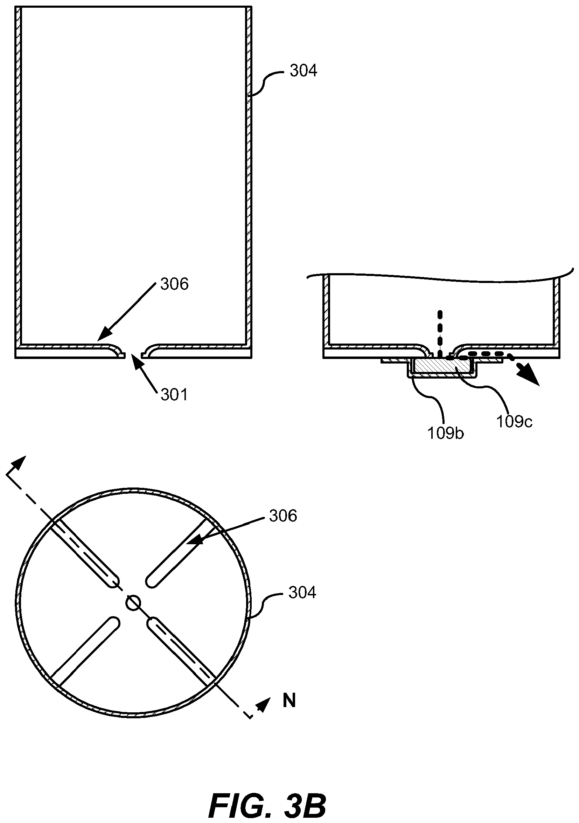

Figure 3B also depicts reinforced can **304.** Can **304** has ridges, **306,** in the base. The top left cross section depicts a cut along line **N.** The bottom left rendering is a top view looking down into can **304.** These ridges are another configuration for imparting rigidity to the base of the can. One of ordinary skill in the art would appreciate that combinations of such structures are within the scope of the invention. For example, ridges **306** may be combined with one or more circular ridges like ridges **302** in can **300**. In another example, the base of the can has ridges in a waffle pattern or the like. In this example, each of cans **300** and **304** are shown with an aperture, **301,** at the base, but this is not limiting (*supra*).

In one embodiment, ridges as described in relation to Figures 3A and 3B are used in conjunction with a current collecting disk. In one embodiment, the current collecting disk is a metal foam. In one embodiment, the current collecting disk is nickel foam. In this embodiment, the nickel foam compresses to conform to the shape of the ridges, so that it does not take up substantially more volume than is necessary. That is, the foam occupies the spaces between the ridges without being compressed, since the jellyroll lies against the top edge of the ridges. In one embodiment, the ridges, whether employed in conjunction with a nickel foam current collector disk or not, are sharp at the top so that they bite into the positive current collector of the jellyroll. In another embodiment, the ridges and/or the bottom of the can is coated with nickel plating.

One of ordinary skill in the art would appreciate that the ridge configurations in Figures 3A and 3B allow attachment of the vent cap to the bottom of the can while also not interfering with the vent mechanism. For example, the vent caps as described in relation to Figures 2E-H would work on can **300**. This is because there are flat surfaces of sufficient area on the bottom of can **300** to make a seal with the septum of the vent cap and/or the base plate **109a** of the vent caps. Can **304** is a good choice for the vent cap described in Figure 2H, because the septum can press against the bottom of can **304** and make a seal. The trenches formed in the bottom of can **304** by virtue of ridges **306** would necessitate a vent configuration for vent cap **109,** for example as in Figures 2E-G, where either where the septum pressed directly onto the bottom of can **304** and/or where trenches were filled, for example, with a sealing member or where the vent cap had ridges that at least partially filled the trenches in the bottom of can **304** when the vent was registered with the can, in order to block venting from occuring via the trenches instead of the vent mechanism described.

In one embodiment, a vent mechanism uses these trenches as a passage for venting. In this embodiment, a vent cap similar to that described in relation to Figure 2H is attached, for example spot welded, to the bottom of can **304**. This is depicted in the middle right rendering in Figure 3B which shows only a the bottom portion of can **304** with a cap **109b** spot welded (not shown), for example, to the flat surfaces on the bottom of can **304** between the trenches formed by ridges **306** in the base of the can. Gas can vent as depicted by the heavy dashed arrow, that is through the aperture and between septum **190c** and the bottom of the can, then through the trenches and out.

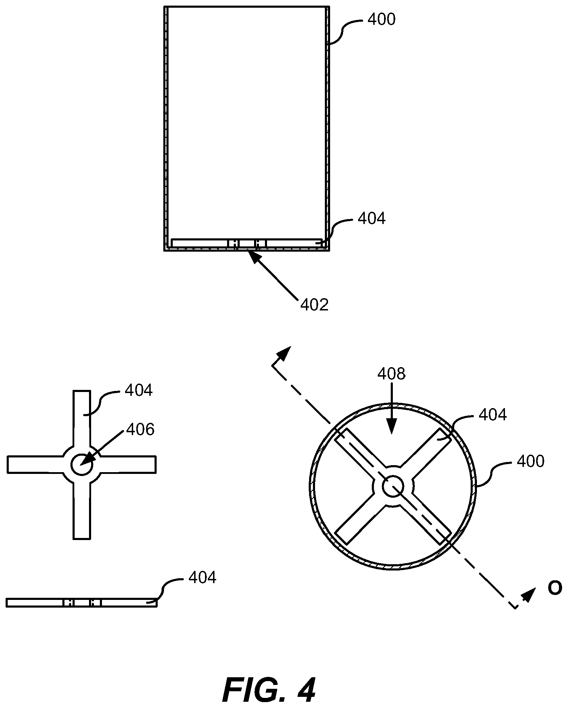

In other embodiments, which do not belong to the invention, a can with a flat bottom is used but a strengthening member is attached to the bottom (inside) of the can. Figure 4 depicts one such embodiment. The top cross section depicts a cut along line **O**. Can **400** has a strengthening member, **404,** attached, for example welded, to the inside bottom of the can. The bottom left rendering in Figure 4 shows that member **404** has four arms and a center hole, **406**. The center hole is configured to register with aperture **402** in the base of the can so that gas can vent through. The bottom left rendering in Figure 4 shows a top view of can **400** with member **404** in the base of the can. The thickness of the strengthening member need only be sufficient to reinforce the base of the can to withstand forces on the base of the can such as shape change in the jellyroll and/or gas pressure prior to venting. Depending on the material, member **404** can be as thin as a millimeter and as thick as a few millimeters. Member **404** need not have the configuration shown in Figure 4, for example, it can be annular, have differing numbers of arms, etc., the member in Figure 4 is only one variation of many possible. The member has a rigid and relatively flat body (to conserve volume in the cell) that imparts reinforcement to the base of the battery can. In the example shown, the areas, **408,** between the arms of the member can be occupied with, for example, nickel foam. In one embodiment, the member is used in conjunction with nickel foam, analogous to the ridges in Figures 3A and 3B, the nickel foam compresses between the jellyroll and member **404** but fills the spaces **408** and sandwiched between the base of the can and the jellyroll in these spaces. Preferably, member **404** is made of a rigid material and is conductive. Member **404** can be, for example, made of steel coated with nickel, or titanium. Venting mechanisms as described herein are welded or otherwise attached to the bottom of a can so configured with such a strengthening member.

METHODS OF MAKING RECHARGEABLE CELLS

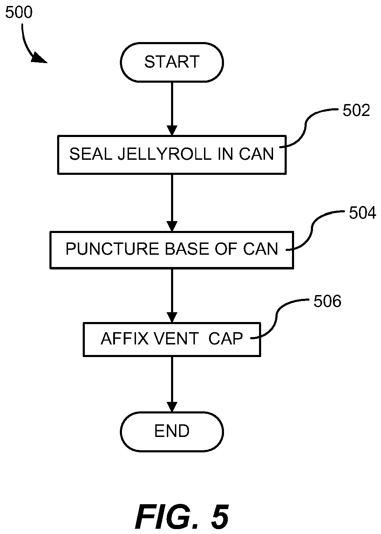

In relation to Figures 1 - 4, cells were described in detail, along with aspects of methods of making the cells. In the description of the cells above, the can is described as having a preformed aperture, e.g. aperture **108**. The invention is not so limited. In the broadest sense, as depicted in the process flow **500** of Figure 5, one embodiment is a method of making a rechargeable nickel zinc cell, the method including: **502)** sealing a jellyroll assembly, including a nickel positive electrode, a zinc negative electrode, and at least one separator layer disposed between said nickel positive electrode and zinc negative electrode, in a can such that the nickel positive electrode is in electrical communication with the base and the body of the can and the zinc negative electrode is in electrical communication with a negative current collecting disc at the other end of the can and electrically isolated from the can; the negative current collecting disc configured as a closure to the open end of the can; **504)** puncturing the battery can at the base of the can, thereby making an aperture in the base of the can; and **506)** affixing a vent cap at the base of the can; the vent cap configured to vent gas from the rechargeable nickel zinc cell via the aperture. Electrolyte is introduced into the can prior to sealing, or after sealing via the aperture. The process flow elements do not have to be performed in the order depicted, for example the base of the can may be punctured, the vent cap can be attached to the can, and then jellyroll sealed in the can as described. In another embodiment, the jellyroll is inserted, the can sealed and then the can is punctured to make the aperture. One embodiment is a battery assembly, including a jellyroll as described herein, sealed in a battery can as described herein, where the battery can is not punctured and, for example, there is no electrolyte or the jellyroll is in a starved state. Such assemblies can be stored and/or shipped for eventual puncture, addition of electrolyte, and attachment of a vent assembly, for example, as described herein.

Also, it is desirable, although not necessary to practice the invention, to plate the interior of the can with, e.g., nickel. If the jellyroll is sealed in the can and the can subsequently punctured to form an aperture as described in the previous embodiment, there may be a small portion of the can at the site of the puncture that is not protected with nickel. Also, in some cases is it difficult to plate the interior of the can effectively. In some embodiments, as mentioned, the positive electrode layer is on the outside of the jellyroll, and therefore, for example when the can is steel, iron degradation products from the can do not significantly interfere with the positive electrode function, and therefore this configuration constitutes an improved nickel zinc cell for this reason, among others described, especially when the negative electrode is selectively sealed as described in relation to Figure 2D and employed, for example, as in Figures 2F and 2H.

In some embodiments however, it is desirable to start with a preformed aperture in the can, then plate the can with a protective agent, for example nickel. In this way there is no portion of aperture 108, and hopefully the interior of the can, that is not protected with nickel. In these embodiments, process operation 504 would be absent from the process flow. Thus another embodiment is a method of making a rechargeable nickel zinc cell, the method including: 502) sealing a jellyroll assembly, including a nickel positive electrode, a zinc negative electrode, and at least one separator layer disposed between said nickel positive electrode and zinc negative electrode, in a can such that the nickel positive electrode is in electrical communication with the base and the body of the can and the zinc negative electrode is in electrical communication with a negative current collecting disc at the other end of the can and electrically isolated from the can; the can including an aperture in the base of the can; the negative current collecting disc configured as a closure to the open end of the can; and 506) affixing a vent cap at the base of the can; the vent cap configured to vent gas from the rechargeable nickel zinc cell via the aperture. Again, process flow operations 502 and 506 can be performed in reverse order as well.

In one embodiment, which can be employed with respect to any of the embodiments above, the can is nickel plated steel. In another embodiment, the negative collector disc is a metal disc coated with a hydrogen evolution resistant material, e.g., at least one of a metal, an alloy and a polymer. Specific examples of these materials are described above an included in embodiments of methods of the invention. The negative disc, for example, can be a steel, brass or copper disk coated with at least one of tin, silver, bismuth, brass, zinc and lead. In one example the disc is brass or copper coated with tin and/or silver. In one embodiment, at least a portion of the disc is coated with a polymer, for example, Teflon.

In method embodiments, which can be employed with respect to any of the embodiments above, electrical communication between the negative collector disc and the zinc negative electrode is made via a welded metal tab, direct contact between the negative collector disc and the negative electrode, and/or a conductive spring configured to make contact with both the zinc negative electrode and the negative collector disc, the conductive spring, for example a spring or reversibly compressive material such as a metal sponge, compressed between the end of the jellyroll and the negative collector disc.

In one embodiment, which can be employed with respect to any of the embodiments above, the methods of making rechargeable nickel zinc cells further include interposing a positive collector disc between, and in electrical communication with, the nickel positive electrode and the base of the can, prior to sealing the jellyroll in the can. In one embodiment, the positive collector disc includes nickel foam.

The materials used to construct the positive electrode and the negative electrode are the same as included in the description above in relation to cells of the invention.

In one embodiment, which can be employed with respect to any of the embodiments above, the methods of making rechargeable nickel zinc cells further includes introducing an alkaline electrolyte into the can, either prior to sealing the jellyroll in the can or via the aperture after the jellyroll is sealed in the can, the alkaline electrolyte including: (a) between about 0.025 M and 0.25 M phosphate; (b) between about 4 M and about 9 M free alkalinity; and (c) up to about 1M borate.

Another embodiment, which can be employed with respect to any of the embodiments above, is a method of making a rechargeable nickel zinc cell as described herein, where the rechargeable nickel zinc cell is configured to a commercially available size selected from the group consisting of AAA, AA, C, D and sub-C.

Although the foregoing invention has been described in some detail to facilitate understanding, the described embodiments are to be considered illustrative and not limiting. It will be apparent to one of ordinary skill in the art that certain changes and modifications can be practiced within the scope of the appended claims.

**Claims**

1. A rechargeable nickel zinc cell, comprising,

   i) a jellyroll electrode assembly (101) sealed in a can (300) and comprising a nickel positive electrode, a zinc negative electrode, and at least one separator layer disposed between the nickel positive electrode and the zinc negative electrode;
   ii) the can (300) in electrical communication with the nickel positive electrode, the can comprising one open end and a base, and an aperture (301) at the base of the can;
   iii) a vent cap (109) affixed to the base of the can and in electrical communication with the can (300), the vent cap (109) configured to vent gas from the rechargeable nickel zinc cell via the aperture (301), wherein the base of the can comprises ridges (302) in the base of the can (300), wherein the ridges are configured to impart rigidity to the base of the can (300); and
   iv) a negative collector disc (103) in electrical communication with the zinc negative electrode and electrically isolated from the can (300), the negative collector disc configured as a closure to the open end of the can (300).

2. The rechargeable nickel zinc cell of claim 1, wherein the can is nickel plated steel.

3. The rechargeable nickel zinc cell of claim 2, wherein the negative collector disc (103) is a metal disc coated with a hydrogen evolution resistant material, optionally wherein the hydrogen evolution resistant material comprises at least one of a metal, an alloy and a polymer, for example, at least one of tin, silver, bismuth, brass, zinc and lead; or optionally wherein the hydrogen resistant material is Teflon .

4. The rechargeable nickel zinc cell of claim 1, wherein electrical communication between the negative collector disc (103) and the zinc negative electrode is made via a conductive spring configured to make contact with both the zinc negative electrode and the negative collector disc, the conductive spring compressed between the end of the jellyroll and the negative collector disc.

5. The rechargeable nickel zinc cell of claim 1, further comprising a positive collector disc interposed between, and in electrical communication with, the nickel positive electrode and the base of the can, optionally wherein the positive collector disc comprises nickel foam.

6. The rechargeable nickel zinc cell of claim 1, wherein the nickel positive electrode comprises a nickel foam substrate impregnated with a mixture of:

   (a) cobalt oxide, in the range of between about 1% to about 10% by weight in the positive electrode, contained within a nickel oxide matrix; and
   (b) cobalt metal in the range of about 1% to 10% by weight in the positive electrode.

7. The rechargeable nickel zinc cell of claim 1, wherein the zinc negative electrode comprises:

   (a) a copper or brass substrate plated with tin or tin/zinc having a thickness of about 40-80 $\mu$In; and,
   (b) a zinc oxide based electrochemically active layer, optionally wherein the zinc oxide based electrochemically active layer comprises:

      (a) zinc metal particles coated with at least one of lead and tin;
      (b) zinc oxide;
      (c) bismuth oxide;
      (d) a dispersing agent; and
      (e) a binding agent;

   or optionally wherein the zinc oxide based electrochemically active layer comprises inorganic fiber, the inorganic fiber comprising silica and alumina, or wherein the zinc oxide based electrochemically active layer comprises carbon fiber.

8. The rechargeable nickel zinc cell of any one of claims 1-7 configured to a commercially available size selected from the group consisting of AAA, AA, C, D and sub-C.

9. A method of making a rechargeable nickel zinc cell, the method comprising:

   i) sealing a jellyroll assembly (101), comprising a nickel positive electrode, a zinc negative electrode, and at least one separator layer disposed between said nickel positive electrode and zinc negative electrode, in a can (300) comprising an open end and a base, and configured so that the nickel positive electrode is in electrical communication with the base and the body of the can (300) and the zinc negative electrode is in electrical communication with a negative current collecting disc (103) at the open end of the can and electrically isolated from the can (300); the negative current collecting disc configured as a closure to the open end of the can (300); and

   ii) affixing a vent cap (109) at the base of the can, in electrical communication with the nickel positive electrode; the vent cap (109) configured to vent gas from the rechargeable nickel zinc cell via an aperture (301) in the base of the can (300), wherein the base of the can (300) comprises ridges (302) in the base of the can (300), wherein the ridges are configured to impart rigidity to the base of the can (300).

10. The method of claim 9, wherein the can (300) comprises nickel plated steel.

11. The method of claim 10, wherein the negative collector disc (103) is a metal disc coated with a hydrogen evolution resistant material, optionally wherein the hydrogen evolution resistant material comprises at least one of a metal, an alloy and a polymer, for example, at least one of tin, silver, bismuth, brass, zinc and lead, or optionally wherein the hydrogen evolution resistant material is Teflon.

12. The method of claim 9, further comprising interposing a positive collector disc between, and in electrical communication with, the nickel positive electrode and the base of the can, prior to sealing the jellyroll in the can, optionally wherein the positive collector disc comprises nickel foam.

13. The method of claim 9, wherein the nickel positive electrode comprises a mixture of

   (a) cobalt oxide, in the range of between about 1% to about 10% by weight in the positive electrode, contained within a nickel oxide matrix, and (b) cobalt metal in the range of about 1% to 10% by weight in the positive electrode.

14. The method of claim 9, wherein the zinc negative electrode comprises:

   (a) a copper or brass substrate plated with a tin or tin/zinc plating on the substrate having a thickness of about 40-80 $\mu$ln; and,
   (b) a zinc oxide based electrochemically active layer, optionally wherein the zinc oxide based electrochemically active layer comprises:

      (a) zinc metal particles coated with at least one of lead and tin;
      (b) zinc oxide;
      (c) bismuth oxide;
      (d) a dispersing agent; and
      (e) a binding agent;

   or optionally wherein the zinc oxide based electrochemically active layer comprises inorganic fiber, the inorganic fiber comprising silica and alumina, or optionally wherein the zinc oxide based electrochemically active layer comprises carbon fiber.

15. The method of claim 9, wherein the rechargeable nickel zinc cell is configured to a commercially available size of AAA, AA, C, D or sub-C.

**Patentansprüche**

1. Wiederaufladbare Nickel-Zink-Zelle, umfassend,

   i) eine Gallertrollen-Elektrodenanordnung (101), versiegelt in einer Dose (300) und umfassend eine positive Nickelelektrode, eine negative Zinkelektrode und mindestens eine Separatorschicht, die zwischen der positiven Nickelelektrode und der negativen Zinkelektrode angeordnet ist;

ii) die Dose (300) in elektrischer Verbindung mit der positiven Nickelelektrode, die Dose umfassend ein offenes Ende und eine Basis und eine Öffnung (301) an der Basis der Dose;

iii) eine Entlüftungskappe (109), die an der Basis der Dose befestigt ist und in elektrischer Verbindung mit der Dose (300) ist, wobei die Entlüftungskappe (109) konfiguriert ist, um über die Öffnung (301) Gas aus der wiederaufladbaren Nickel-Zink-Zelle zu entlüften, wobei die Basis der Dose Rippen (302) in der Basis der Dose (300) umfasst, wobei die Rippen konfiguriert sind, um der Basis der Dose (300) Steifigkeit verleihen; und

iv) eine negative Kollektorscheibe (103) in elektrischer Verbindung mit der negativen Zinkelektrode und elektrisch isoliert von der Dose (300), wobei die negative Kollektorscheibe als Verschluss für das offene Ende der Dose (300) konfiguriert ist.

2. Wiederaufladbare Nickel-Zink-Zelle gemäß Anspruch 1, wobei die Dose vernickelter Stahl ist.

3. Wiederaufladbare Nickel-Zink-Zelle gemäß Anspruch 2, wobei die negative Kollektorscheibe (103) eine Metallscheibe ist, die mit einem wasserstoffentwicklungsbeständigen Material beschichtet ist, wobei das wasserstoffentwicklungsbeständige Material mindestens eines von einem Metall, einer Legierung und einem Polymer umfasst, beispielsweise mindestens eines von Zinn, Silber, Wismut, Messing, Zink und Blei; oder optional wobei das wasserstoffbeständige Material Teflon ist.

4. Wiederaufladbare Nickel-Zink-Zelle gemäß Anspruch 1, wobei eine elektrische Verbindung zwischen der negativen Kollektorscheibe (103) und der negativen Zinkelektrode über eine leitende Feder hergestellt wird, die konfiguriert ist, um sowohl mit der negativen Zinkelektrode als auch mit der negativen Kollektorscheibe Kontakt herzustellen, wobei die leitende Feder zwischen dem Ende der Gallertrolle und der negativen Kollektorscheibe komprimiert wird.

5. Wiederaufladbare Nickel-Zink-Zelle gemäß Anspruch 1, ferner umfassend eine positive Kollektorscheibe, die zwischen der positiven Nickelelektrode und dem Boden der Dose angeordnet ist und mit diesen in elektrischer Verbindung ist, optional wobei die positive Kollektorscheibe Nickelschaum umfasst.

6. Wiederaufladbare Nickel-Zink-Zelle gemäß Anspruch 1, wobei die positive Nickelelektrode ein Nickelschaumsubstrat umfasst, das mit einem Gemisch aus Folgenden imprägniert ist

(a) Kobaltoxid in dem Bereich von etwa 1 bis etwa 10 Gewichtsprozent in der positiven Elektrode, das in einer Nickeloxidmatrix enthalten ist; und

(b) Kobaltmetall in dem Bereich von etwa 1 bis 10 Gewichtsprozent in der positiven Elektrode.

7. Wiederaufladbare Nickel-Zink-Zelle gemäß Anspruch 1, wobei die negative Zinkelektrode Folgendes umfasst:

(a) ein Kupfer- oder Messingsubstrat, überzogen mit Zinn oder Zinn/Zink, das eine Stärke von etwa 40-80 $\mu$In aufweist; und,

(b) eine elektrochemisch aktive Schicht auf Zinkoxidbasis, optional wobei die elektrochemisch aktive Schicht auf Zinkoxidbasis Folgendes umfasst:

(a) Zinkmetallpartikel, die mit mindestens einem von Blei und Zinn beschichtet sind;

(b) Zinkoxid;

(c) Wismutoxid;

(d) ein Dispergiermittel; und

(e) ein Bindemittel;

oder optional wobei die elektrochemisch aktive Schicht auf Zinkoxidbasis anorganische Fasern umfasst, die anorganischen Fasern umfassend Siliziumdioxid und Aluminiumoxid, oder wobei die elektrochemisch aktive Schicht auf Zinkoxidbasis Kohlenstofffaser umfasst.

8. Wiederaufladbare Nickel-Zink-Zelle gemäß einem der Ansprüche 1-7, die auf eine kommerziell verfügbare Größe konfiguriert ist, ausgewählt aus der Gruppe bestehend aus AAA, AA, C, D und Sub-C.

9. Verfahren zum Herstellen einer wiederaufladbaren Nickel-Zink-Zelle, das Verfahren umfassend:

i) Versiegeln einer Gallertrollen-Elektrodenanordnung (101), umfassend eine positive Nickelelektrode, eine negative Zinkelektrode und mindestens eine Separatorschicht, die zwischen der positiven Nickelelektrode und der negativen Zinkelektrode angeordnet ist, in einer Dose (300), umfassend ein offenes Ende und einen Boden, und die konfiguriert ist, sodass die positive Nickelelektrode in elektrischer Verbindung mit dem Boden und dem Körper der Dose (300) ist, und die negative Zinkelektrode in elektrischer Verbindung mit einer negativen Kollektorscheibe (103) an dem offenen Ende der Dose ist und von der Dose (300) elektrisch isoliert ist; wobei die negative Kollektorscheibe als Verschluss für das offene Ende der Dose (300) konfiguriert ist; und

ii) Befestigen einer Entlüftungskappe (109) an der Basis der Dose, die in elektrischer Verbindung mit der positiven Nickelelektrode ist; wobei die Entlüftungskappe (109) konfiguriert ist, um Gas aus der wiederaufladbaren Nickel-Zink-Zelle über eine Öffnung (301) in der Basis der Dose (300) zu entlüften, wobei die Basis der Dose (300) Rippen (302) in der Basis der Dose (300) umfasst, wobei die Rippen konfiguriert sind, um der Basis der Dose (300) Steifigkeit zu verleihen.

10. Verfahren gemäß Anspruch 9, wobei die Dose (300) vernickelten Stahl umfasst.

11. Verfahren gemäß Anspruch 10, wobei die negative Kollektorscheibe (103) eine Metallscheibe ist, die mit einem wasserstoffentwicklungsbeständigen Material beschichtet ist, wobei das wasserstoffentwicklungsbeständige Material mindestens eines von einem Metall, einer Legierung und einem Polymer umfasst, beispielsweise mindestens eines von Zinn, Silber, Wismut, Messing, Zink und Blei; oder optional wobei das wasserstoffentwicklungsbeständige Material Teflon ist.

12. Verfahren gemäß Anspruch 9, ferner umfassend ein Einfügen einer positiven Kollektorscheibe zwischen und in elektrischer Verbindung mit der positiven Nickelelektrode und dem Boden der Dose vor dem Versiegeln der Gallertrolle in der Dose, optional wobei die positive Kollektorscheibe Nickelschaum umfasst.

13. Verfahren gemäß Anspruch 9, wobei die positive Nickelelektrode ein Gemisch aus (a) Kobaltoxid in dem Bereich von etwa 1 bis etwa 10 Gewichtsprozent in der positiven Elektrode, das in einer Nickeloxidmatrix enthalten ist, und (b) Kobaltmetall in dem Bereich von etwa 1 bis 10 Gewichtsprozent in der positiven Elektrode umfasst.

14. Verfahren gemäß Anspruch 9, wobei die negative Zinkelektrode Folgendes umfasst:

   (a) ein Kupfer- oder Messingsubstrat, das mit einem Zinn- oder Zinn/Zink-Überzug auf dem Substrat mit einer Stärke von etwa 40-80 μln überzogen ist; und,
   (b) eine elektrochemisch aktive Schicht auf Zinkoxidbasis, optional wobei die elektrochemisch aktive Schicht auf Zinkoxidbasis Folgendes umfasst:

      (a) Zinkmetallpartikel, die mit mindestens einem von Blei und Zinn beschichtet sind;
      (b) Zinkoxid;
      (c) Bismutoxid;
      (d) ein Dispergiermittel; und
      (e) ein Bindemittel;

   oder optional wobei die elektrochemisch aktive Schicht auf Zinkoxidbasis anorganische Fasern umfasst, die anorganischen Fasern umfassend Siliziumdioxid und Aluminiumoxid, oder optional wobei die elektrochemisch aktive Schicht auf Zinkoxidbasis Kohlenstofffaser umfasst.

15. Verfahren gemäß Anspruch 9, wobei die wiederaufladbare Nickel-Zink-Zelle auf eine kommerziell verfügbare Größe von AAA, AA, C, D oder Sub-C konfiguriert ist.

## Revendications

1. Une pile nickel-zinc rechargeable, comprenant,

   i) un ensemble électrode en rouleau de gelée (101) scellé dans une boîte (300) et comprenant une électrode positive en nickel, une électrode négative de zinc, et au moins une couche de séparation disposée entre l'électrode positive en nickel et l'électrode négative de zinc ;
   ii) la boîte (300) en communication électrique avec l'électrode positive en nickel, la boîte comprenant une extrémité ouverte et une base, et une ouverture (301) à la base de la boîte ;

iii) un bouchon de ventilation (109) fixé à la base de la boîte et en communication électrique avec la boîte (300), le bouchon de ventilation (109) étant configuré pour évacuer le gaz de la pile nickel-zinc rechargeable via l'ouverture (301), dans lequel la base de la boîte comprend des nervures (302) dans la base de la boîte (300), dans lequel les nervures sont configurées pour conférer une rigidité à la base de la boîte (300) ; et

iv) un disque collecteur négatif (103) en communication électrique avec l'électrode négative de zinc et isolé électriquement de la boîte (300), le disque collecteur négatif étant configuré comme une fermeture de l'extrémité ouverte de la boîte (300).

**2.** La pile nickel-zinc rechargeable selon la revendication 1, dans laquelle la boîte est en acier nickelé.

**3.** La pile nickel-zinc rechargeable selon la revendication 2, dans laquelle le disque collecteur négatif (103) est un disque métallique revêtu d'un matériau résistant au dégagement d'hydrogène, éventuellement dans laquelle le matériau résistant au dégagement d'hydrogène comprend au moins un parmi un métal, un alliage et un polymère, par exemple, au moins un parmi l'étain, l'argent, le bismuth, le laiton, le zinc et le plomb ; ou éventuellement dans laquelle le matériau résistant à l'hydrogène est le Téflon.

**4.** La pile nickel-zinc rechargeable selon la revendication 1, dans laquelle la communication électrique entre le disque collecteur négatif (103) et l'électrode négative de zinc est réalisée par l'intermédiaire d'un ressort conducteur configuré pour établir un contact à la fois avec l'électrode négative de zinc et le disque collecteur négatif, le ressort conducteur étant comprimé entre l'extrémité du rouleau de gelée et le disque collecteur négatif.

**5.** La pile nickel-zinc rechargeable selon la revendication 1, comprenant en outre un disque collecteur positif interposé entre, et en communication électrique avec, l'électrode positive en nickel et la base de la boîte, éventuellement dans laquelle le disque collecteur positif comprend de la mousse de nickel.

**6.** La pile nickel-zinc rechargeable selon la revendication 1, dans laquelle l'électrode positive en nickel comprend un substrat en mousse de nickel imprégné d'un mélange de :

(a) oxyde de cobalt, dans la plage d'environ 1 % à environ 10 % en poids dans l'électrode positive, contenu dans une matrice d'oxyde de nickel ; et
(b) cobalt métallique dans la plage d'environ 1 % à 10 % en poids dans l'électrode positive.

**7.** La pile nickel-zinc rechargeable selon la revendication 1, dans laquelle l'électrode négative de zinc comprend :

(a) un substrat de cuivre ou de laiton plaqué avec de l'étain ou de l'étain / zinc ayant une épaisseur d'environ 40 à 80 $\mu$In ; et,
(b) une couche électrochimiquement active à base d'oxyde de zinc, éventuellement dans laquelle la couche électrochimiquement active à base d'oxyde de zinc comprend :

(a) des particules métalliques de zinc revêtues d'au moins un élément parmi le plomb et l'étain ;
(b) de l'oxyde de zinc ;
(c) de l'oxyde de bismuth ;
(d) un agent dispersant ; et
(e) un agent de liaison ;

ou éventuellement dans laquelle la couche électrochimiquement active à base d'oxyde de zinc comprend une fibre inorganique, la fibre inorganique comprenant de la silice et de l'alumine, ou dans laquelle la couche électrochimiquement active à base d'oxyde de zinc comprend une fibre de carbone.

**8.** La pile nickel-zinc rechargeable selon l'une quelconque des revendications 1 à 7, configurée selon une taille disponible dans le commerce choisie dans le groupe constitué par AAA, AA, C, D et sub-C.

**9.** Un procédé de fabrication d'une pile nickel-zinc rechargeable, le procédé comprenant :

i) le scellement d'un ensemble rouleau de gelée (101), comprenant une électrode positive en nickel, une électrode négative de zinc, et au moins une couche de séparation disposée entre ladite électrode positive en nickel et ladite électrode négative de zinc, dans une boîte (300) comprenant une extrémité ouverte et une base, et configurée de sorte que l'électrode positive en nickel soit en communication électrique avec la base et le corps de la boîte (300) et que l'électrode négative de zinc soit en communication électrique avec un disque collecteur de courant négatif (103) à l'extrémité ouverte de la boîte et isolé électriquement de la boîte (300) ; le disque collecteur de courant négatif configuré comme une fermeture de l'extrémité ouverte de la boîte (300) ; et ii) la fixation d'un bouchon de ventilation (109) à la base de la boîte, en communication électrique avec l'électrode positive en nickel ; le bouchon de ventilation (109) étant configuré pour évacuer le gaz de la pile nickel-zinc rechargeable via une ouverture (301) dans la base de la boîte (300), dans laquelle la base de la boîte (300) comprend des nervures (302) dans la base de la boîte (300), dans laquelle les nervures sont configurées pour conférer une rigidité à la base de la boîte (300).

10. Le procédé selon la revendication 9, dans lequel la boîte (300) comprend de l'acier nickelé.

11. Le procédé selon la revendication 10, dans lequel le disque collecteur négatif (103) est un disque métallique revêtu d'un matériau résistant au dégagement d'hydrogène, éventuellement dans lequel le matériau résistant au dégagement d'hydrogène comprend au moins un parmi un métal, un alliage et un polymère, par exemple, au moins un parmi l'étain, l'argent, le bismuth, le laiton, le zinc et le plomb, ou éventuellement dans lequel le matériau résistant à l'hydrogène est le Téflon.

12. Le procédé selon la revendication 9, comprenant en outre l'interposition d'un disque collecteur positif entre, et en communication électrique avec, l'électrode positive en nickel et la base de la boîte, avant de sceller le rouleau de gelée dans la boîte, éventuellement dans lequel le disque collecteur positif comprend de la mousse de nickel.

13. Le procédé selon la revendication 9, dans lequel l'électrode positive en nickel comprend un mélange (a) d'oxyde de cobalt, dans la plage d'environ 1 % à environ 10 % en poids dans l'électrode positive, contenu dans une matrice d'oxyde de nickel, et (b) de cobalt métallique dans la plage d'environ 1 % à 10 % en poids dans l'électrode positive.

14. Le procédé selon la revendication 9, dans lequel l'électrode négative de zinc comprend :

(a) un substrat de cuivre ou de laiton plaqué avec un placage d'étain ou d'étain / zinc sur le substrat ayant une épaisseur d'environ 40 à 80 $\mu$ln ; et,
(b) une couche électrochimiquement active à base d'oxyde de zinc, éventuellement dans laquelle la couche électrochimiquement active à base d'oxyde de zinc comprend :

(a) des particules métalliques de zinc revêtues d'au moins un élément parmi le plomb et l'étain ;
(b) de l'oxyde de zinc ;
(c) de l'oxyde de bismuth ;
(d) un agent dispersant ; et
(e) un agent de liaison ;

ou éventuellement dans lequel la couche électrochimiquement active à base d'oxyde de zinc comprend une fibre inorganique, la fibre inorganique comprenant de la silice et de l'alumine, ou éventuellement dans lequel la couche électrochimiquement active à base d'oxyde de zinc comprend une fibre de carbone.

15. Le procédé selon la revendication 9, dans lequel la pile nickel-zinc rechargeable est configurée selon une taille disponible dans le commerce comme AAA, AA, C, D ou sub-C.

111

103

B

101

115

113

108

112

109

**FIG. 1**

**FIG. 2A**

**FIG. 2B**

FIG. 2C

**FIG. 2D**

*FIG. 2E*

**FIG. 2F**

112

109b

150

109a

109d

109b

150

C

109a

109d

E

F

G

H

109a

109c

L

**FIG. 2G**

*FIG. 2H*

FIG. 3A

**FIG. 3B**

33

**FIG. 4**

500

START

SEAL JELLYROLL IN CAN — 502

PUNCTURE BASE OF CAN — 504

AFFIX VENT CAP — 506

END

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004213947 A
- US 11611305
- US 20060240317 A1
- US 2006015807 W
- US 2004026859 W
- WO 2005020353 A3
- US 5215836 A, M. Eisenberg
- US 7550230 B, J.Phillips and S. Mohanta
- US 46799309, J. Phillips et. al.
- WO 0239517 A, J. Phillips
- WO 02039520 A, J. Phillips
- WO 0239521 A
- WO 02039534 A, J. Phillips
- US 2002182501 A
- US 6797433 B, Jeffrey Phillips
- US 6835499 B, Jeffrey Phillips
- US 6818350 B, Jeffrey Phillips
- NZ 0200036 W
- WO 02075830 A, Hall et al.
- US 6811926 B, Jeffrey Phillips
- US 85234510, Jeffrey Phillips
- US 87784110, McKinney et. al
- US 877841